# FASCICULE DE BREVET EUROPEEN

(11) **EP 1 434 700 B1**
(45) Date de publication et mention de la délivrance du brevet: **16.11.2005**
(21) Numéro de dépôt: 02781388.0
(22) Date de dépôt: 27.09.2002
(51) Int. Cl.: B60K 17/30

(54) **ESSIEU MOTEUR-DIRECTEUR POUR VEHICULES MOTORISES**
ANTRIEBSLENKACHSE FÜR MOTORGETRIEBENE FAHRZEUGE
DRIVE-STEER AXLE FOR MOTOR-DRIVEN VEHICLES

(30) Priorité: 05.10.2001 FR 0112871
(43) Date de publication de la demande: 07.07.2004
(73) Titulaire: GKN Driveline International GmbH, 53797 Lohmar (DE)
(72) Inventeur: BROSSARD, Jean-Claude, F-78250 Meulan (FR)
(74) Mandataire: Blot, Philippe Robert Emile
(86) Numéro de dépôt international: PCT/FR2002/003322
(87) Numéro de publication internationale: WO 2003/041986

(56) Documents cités:
- DE-C- 489 332
- DE-C- 597 232
- FR-A- 712 018
- US-A- 1 847 749
- US-A- 1 981 173
- US-A- 2 084 429

## Description

La présente invention concerne un essieu moteur-directeur pour véhicules motorisés, du type défini dans le préambule de la revendication 1.

Ce type d'essieu est utilisé dans le domaine des véhicules motorisés de type « TRM », c'est-à-dire Toutes Roues Motrices, comme les engins industriels, les tracteurs agricoles ou les véhicules de tourisme « 4x4 ». En effet, ce type de véhicule comporte au moins un tel essieu moteur-directeur, couramment appelé « essieu rigide », muni d'un différentiel et capable à la fois de transmettre, depuis le boîtier de différentiel, un couple d'entraînement à chaque roue dont est munie chacune de ses extrémités, et de permettre le braquage de ces roues lorsque le véhicule doit changer de direction. Plus précisément, un tel essieu moteur-directeur comprend :
- un corps d'essieu faisant office de poutre, constitué d'un carter central pourvu d'un ensemble différentiel et de ses roulements de support, prolongé de deux trompettes latérales, une par coté du véhicule, chacune de celles-ci se terminant par une mâchoire de pivotement de direction ; dans chaque trompette, est agencé un arbre menant supporté, coté mâchoire, par un roulement, et, coté différentiel, par un planétaire correspondant de l'ensemble différentiel, duquel il est rendu solidaire en rotation par des cannelures ;
- un moyeu de roue, sur chaque côté du véhicule, supportant la roue grâce à des roulements, celle-ci recevant son mouvement de rotation d'une fusée qui le traverse, formant arbre mené ; le moyeu de roue est lui aussi muni d'une mâchoire de pivotement, laquelle s'associe à celle de la trompette du corps d'essieu, suivant un axage de pivot à peu près vertical, couramment appelé « pivot de roue » ; et
- une articulation qui assure la transmission du couple de l'arbre menant placé dans la trompette du corps d'essieu à la fusée de roue, que la roue soit droite ou pivotée, et qui est positionné à l'aplomb de l'axage du pivot de roue.

Diverses articulations ont été employées jusqu'ici pour assurer la transmission de couple au niveau du pivot de roue. D'abord, par exemple, des articulations avec double-joint possédant une cinématique à la cardan ont été préférées, la distance entre les centres d'articulations des joints élémentaires du double-joint étant constante, telles que les articulations Richard Bussien décrites par exemple dans US 1 847 749 et US 2 084 429.

Puis, s'est répandu l'usage d'articulation avec des double-joints constitués de deux joints élémentaires fixes de type cardan.

Dans tous les cas, ces articulations entraînent, lors du braquage des roues, et donc lors de la brisure du double-joint, un mouvement de translation de l'un des arbres. Ce mouvement est absorbé soit par les cannelures d'entraînement du planétaire du différentiel (arbre menant), soit par celles d'un réducteur de roue (arbre mené), ce qui génère des contraintes mécaniques supplémentaires dommageables au bon fonctionnement et à la fiabilité de l'articulation, tant au niveau du double-joint que des organes d'étanchéité et des moyens de support des arbres, tels que leurs roulements.

De plus, les articulations à deux joints fixes à cardan, en configuration dite "W", présentent l'inconvénient d'une forte perte en transmission de couple dès que l'angle de brisure formé entre les axes des arbres menant et mené s'écarte de l'angle nul.

Le but de l'invention est de proposer un essieu moteur-directeur du type évoqué ci-dessus dont le comportement mécanique, notamment du point de vue des frottements, des bruits et des vibrations, est amélioré.

A cet effet, l'invention a pour objet un essieu moteur-directeur du type précité et qui présente les caractéristiques de la partie caractérisante de la revendication 1.

D'autres caractéristiques de cet essieu, prises isolément ou selon toutes les combinaisons techniquement possibles, sont énoncées dans les revendications dépendantes 2 à 26.

L'invention sera mieux comprise à la lecture de la description qui va suivre, donnée uniquement à titre d'exemple, et faite en se référant aux dessins sur lesquels :
- la figure 1 est une vue partiellement en coupe longitudinale d'un essieu moteur-directeur selon l'invention ;
- la figure 2 est une vue en coupe selon le plan II-II indiqué sur un détail cerclé I de la figure 1, illustrant un double-joint de l'essieu de la figure 1 ;
- la figure 3 est une vue en coupe suivant le plan indiqué III-III sur la figure 2 ;
- la figure 4 est une vue en perspective d'une pièce du double-joint de l'essieu selon l'invention ;
- les figures 5 et 6 sont des vues en élévation prises respectivement suivant les flèches V et VI indiquées sur la figure 4, de la pièce de la figure 4 pourvue d'un insert en matière plastique ;
- la figure 7 est une vue à plus grande échelle du détail cerclé VII sur la figure 2 ;
- la figure 8 est une vue analogue à la figure 2, montrant l'essieu dans un état de fonctionnement différent de celui de la figure 2 ;
- la figure 9 est une vue analogue à la figure 7, d'une variante de l'insert en matière plastique;
- la figure 10 est une vue analogue à la figure 4, montrant une variante de la pièce de la figure 4 ;
- les figures 11 et 12 sont des vues analogues aux figures 2 et 8, d'un double joint pourvu de deux pièces de la figure 10 ;
- la figure 13 est une vue à plus grande échelle du détail cerclé XIII sur la figure 11 ;
- les figures 14A, 14B et 14C sont des vues partiellement en coupe longitudinale de l'essieu de la figure 1 équipé du double joint des figures 11 et 12, illustrant l'assemblage de cet essieu ;
- les figures 15 et 16 sont des vues analogues à la figure 11, montrant des variantes de la pièce de la figure 10 ;
- les figures 17A et 17B sont des vues analogues aux figures 2 et 14C, montrant un aménagement complémentaire de la pièce de la figure 10 ;
- les figures 18 et 19 sont des vues de variantes de réalisation de l'extrémité d'arbre encadrée XVIII sur la figure 2 ;
- les figures 20A et 20B illustrent une variante du double-joint de la figure 2, la figure 20A étant une vue sensiblement analogue à la figure 2, et la figure 20B étant une vue en coupe selon le plan XX-XX indiqué sur la figure 20A ;
- la figure 21 est une vue sensiblement analogue à la figure 8 et illustre une autre variante d'un double-joint de l'essieu selon l'invention ;
- les figures 22A et 22B illustrent une autre variante d'un double-joint de l'essieu selon l'invention, la figure 22A étant une vue sensiblement analogue à la figure 2 et la figure 22B étant une vue sensiblement analogue à la figure 8 ;
- la figure 23 est une vue sensiblement analogue à la figure 2, montrant un second mode de réalisation de l'essieu ;
- la figure 24 est une vue en coupe selon le plan XXIV-XXIV indiqué sur la figure 23 ;
- les figures 25A et 25B sont des vues analogues à la figure 23, illustrant chacune un état de fonctionnement de l'essieu selon l'invention ; et
- la figure 26 est une vue analogue à la figure 23, mais d'une variante du second mode de réalisation de la figure 23.

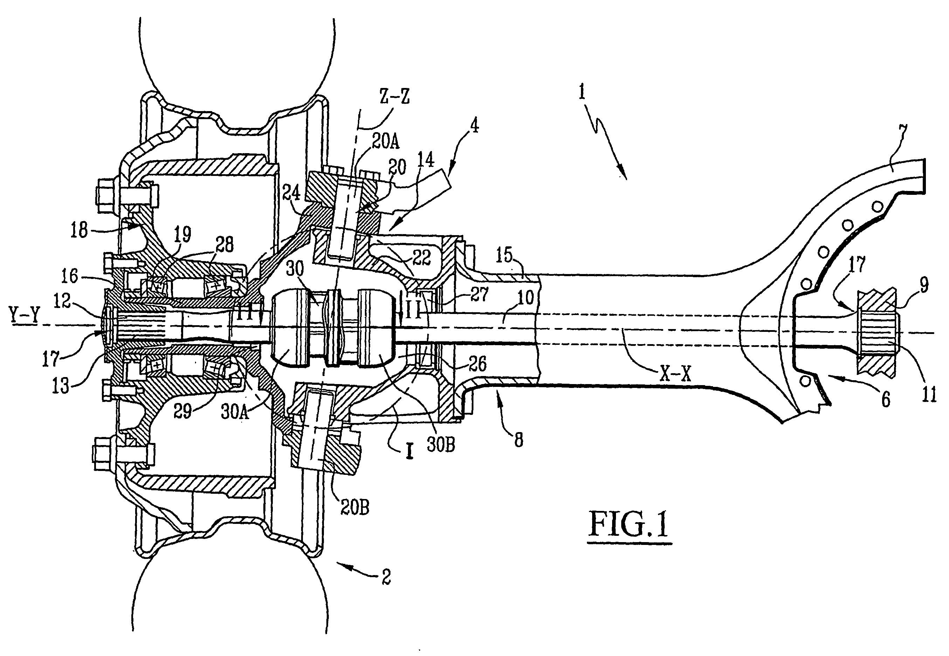

Sur la figure 1 est représenté un essieu moteur-directeur ou essieu rigide 1, dont seule sensiblement une moitié est visible sur la figure 1. Cet essieu est destiné à équiper un véhicule motorisé de type « Toutes Roues Motrices », tels que les engins industriels ou tracteurs agricoles.

Cet essieu moteur-directeur 1 est pourvu à chacune de ses extrémités d'une route motrice 2 et est adaptée pour à la fois permettre au châssis du véhicule de prendre appui sur ses roues, supporter des organes 4 de commande directionnelle de ces roues motrices tout en maintenant constant l'écartement entre elles, et transmettre un couple d'entraînement à chacune de ces roues 2.

L'essieu 1 comporte, dans sa partie courante, un ensemble différentiel 6 agencé dans un carter d'essieu 7 et adapté pour permettre aux roues motrices 2 de tourner à des vitesses différentes dans les virages, comme il est connu dans la technique. Cet ensemble différentiel 6 ne sera pas, en tant que tel, détaillé plus avant.

L'essieu 1 comporte deux lignes de transmission 8 s'étendant depuis le différentiel 6 jusqu'à respectivement une roue motrice 2. Seule une de ces lignes de transmission est visible sur la figure 1 et va être détaillée à la suite, étant entendu que la deuxième ligne de transmission non représentée est pourvue d'aménagements analogues.

Cette ligne de transmission 8 comporte un arbre menant 10 d'axe X-X relié au différentiel 6, un arbre mené 12 d'axe Y-Y relié à la roue 2 et un ensemble articulé de transmission de couple 14. Sur la figure 1, les axes X-X et Y-Y sont confondus, ce qui n'est pas nécessairement toujours le cas, les axes X-X et Y-Y pouvant ne pas être coplanaires.

Plus précisément, l'extrémité intérieure 11 de l'arbre 10 est rendu solidaire d'un planétaire 9 de l'ensemble différentiel 6 assurant à la fois l'entraînement en rotation de l'arbre et la retenue axiale de cet arbre. A cet effet, l'extrémité 11 est cannelée de façon complémentaire à un alésage brochée du planétaire 9. De plus, l'arbre 10 s'étend à l'intérieur d'une trompette fixe de protection 15, solidaire du carter d'essieu 7.

L'arbre 12 est rendu solidaire de la roue 2 par l'intermédiaire d'un manchon 16 solidaire d'une part de l'extrémité extérieure 13 de l'arbre 12, et d'autre part d'une fusée de roue 18 de la roue 2. L'extrémité extérieure 13 de l'arbre 12 est à cet effet cannelée de façon complémentaire à un alésage brochée du manchon 16. L'arbre 12 s'étend à l'intérieur d'un moyeu 19.

Les extrémités 11 et 13 des arbres 10 et 12 sont retenus axialement respectivement par rapport au planétaire 9 et au manchon 16 par des organes de fixation, tels que des vis, des écrous et/ou des circlips, non représentés en détail et référencés de manière générale par le numéro 17.

L'ensemble 14 est destiné à transmettre un couple d'entraînement de l'arbre menant 10 à l'arbre mené 12, tout en permettant le braquage de la roue 2. A cet effet, l'ensemble 14 est relié aux organes 4 de commande directionnelle de la roue 2 et comporte un pivot 20 d'axe Z-Z, ainsi que deux mâchoires en C 22 et 24 en vis-à-vis. Ces mâchoires sont articulées autour du pivot 20 par les extrémités des C et délimitent ensemble une cavité d'articulation 26.

Le pivot 20 est constitué de deux tourillons sous forme de tiges 20A et 20B sensiblement coaxiales et d'axe Z-Z faiblement incliné sur la verticale, chaque tige s'étendant à l'intérieur de perforations correspondantes ménagées dans chaque mâchoire 22, 24 de part et d'autre de la cavité 26.

Par ailleurs, la mâchoire 22 est reliée à l'arbre 10 par l'intermédiaire d'un palier 27 de support de cet arbre et est solidaire de la trompette 15 de l'arbre 10. La mâchoire 24 supporte l'arbre 12 par l'intermédiaire d'un palier 29 et est solidaire, d'une part, de l'organe 4 de commande de direction de la roue et, d'autre part, du moyeu de roue 19, lequel supporte la fusée de roue 18 par l'intermédiaire de roulements 28. Ces roulements 28 sont adaptés pour transmettre à la roue 2 le mouvement de pivotement, autour de l'axe Z-Z, de la mâchoire 24 par rapport à la mâchoire 22, lequel mouvement est commandé par l'organe 4 et permet ainsi de braquer la roue 2.

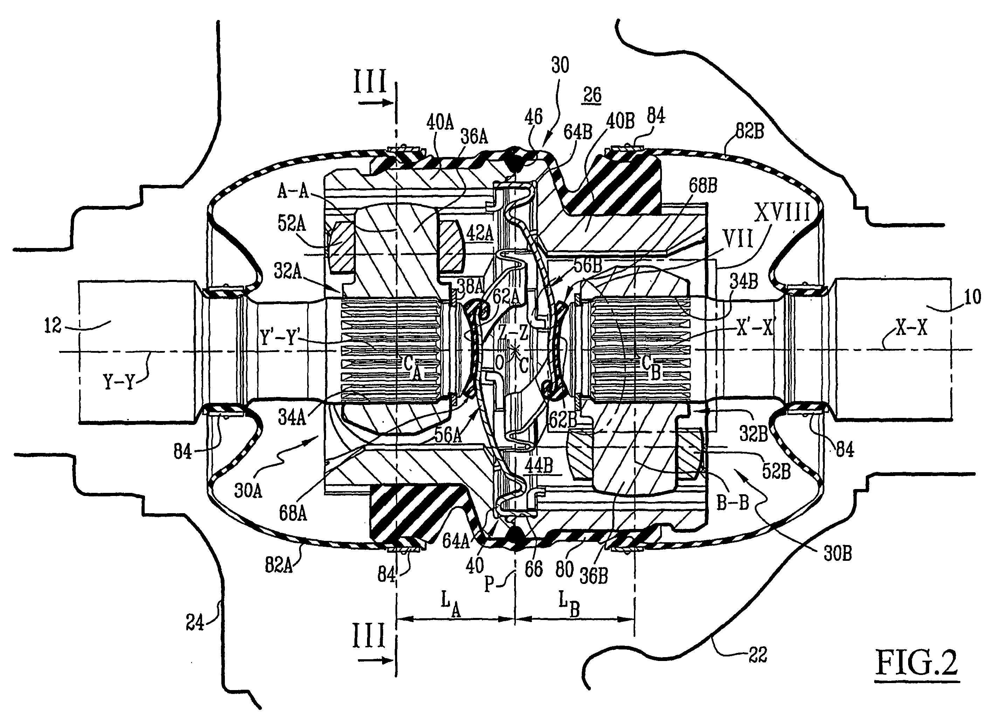

L'ensemble 14 comporte également un double-joint 30 de transmission de couple reliant l'arbre menant 10 à l'arbre mené 12, agencé à l'intérieur de la cavité 26. Cet organe 30 est représenté en détail sur les figures 2 à 8, les mâchoires 22 et 24 n'étant qu'esquissées sur ces figures.

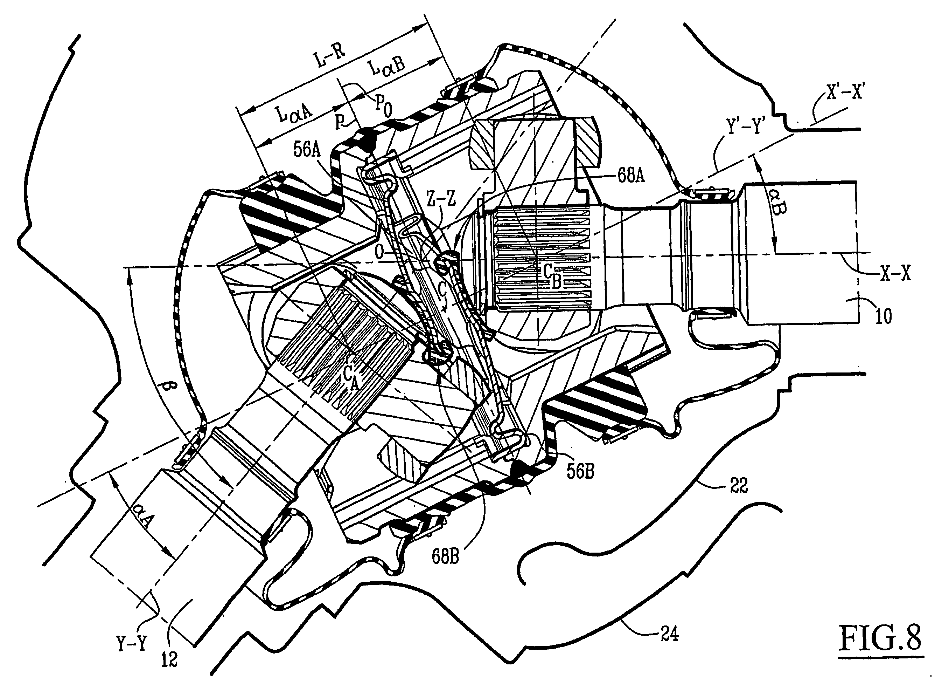

Le double-joint 30 comporte deux joints élémentaires 30A et 30B, à savoir deux joints homocinétiques à tripode et coulissants dans le mode de réalisation des figures 2 à 5. Ce double-joint 30 définit un centre d'articulation O à l'intersection des axes des arbres menant 10 et mené 12 lorsque ceux-ci forment un angle de brisure β (figure 8). De plus, le double-joint 30 est positionné, lors du montage de l'articulation 14, à l'intérieur de la cavité 26 de façon que l'axe de pivot Z-Z passe sensiblement par le centre d'articulation O.

Par la suite, les pièces du joint 30A vont être décrites plus en détail, les pièces du joint 30B étant analogues et référencées par le même numéro suivi de la lettre B.

Le joint 30A comporte essentiellement les pièces suivantes :
1) Un élément mâle ou tripode 32A, de symétrie ternaire par rapport à l'axe central Y-Y (l'axe X-X pour le joint 30B), et qui comprend un alésage à cannelures 34A et trois bras radiaux 36A d'axe A-A espacés angulairement de 120° et dont un seul est représenté. L'intersection des axes Y-Y et A-A définit le centre de brisure C_{A} du joint 30A. L'alésage à cannelures 34A est adapté pour être emmanché serré sur l'extrémité correspondante cannelée de l'arbre 10, cette dernière étant arrêtée axialement par un anneau d'arrêt 38A.
2) Un élément femelle ou tulipe 40A de symétrie ternaire par rapport à un axe central Y'-Y' (respectivement un axe X'-X' pour le joint 30B), ce dernier axe étant confondu avec l'axe Y-Y dans la position alignée du joint représenté sur la figure 2. De part et d'autre de chaque bras 36A, cette tulipe présente deux pistes cylindriques 42A et 44A en vis-à-vis en formant une voûte 45A. Les deux éléments femelles 40A et 40B sont solidaires l'un de l'autre suivant un plan P sensiblement perpendiculaire aux axes X'-X' et Y'-Y', par exemple au moyen d'un cordon de soudure 46, de sorte que, d'une part, ils sont sensiblement coaxiaux, c'est-à-dire que les axes Y'-Y' et X'-X' sont sensiblement confondus, et que, d'autre part, le déphasage entre une paire de pistes 42A, 44A du joint 30A et la paire suivante de pistes 42B, 44B du joint 30B est sensiblement égale à 60°. Les éléments 40A et 40B forment ainsi un corps de double-joint 40, ou « double-tulipe », d'axe de double-joint X'-X' pour le double-joint 30, de centre C défini par l'intersection de l'axe X'-X' avec le plan P.
3) Pour chaque bras 36A, des moyens respectifs de transmission mécanique 50A qui comprennent un galet extérieurement sphérique 52A d'axe de révolution sensiblement confondu avec l'axe A-A du bras 36A correspondant la position représentée sur la figure 2. Le galet 52A est destiné à rouler sur l'une ou l'autre des pistes 42A et 44A correspondantes et coulisse sur son bras 36A.

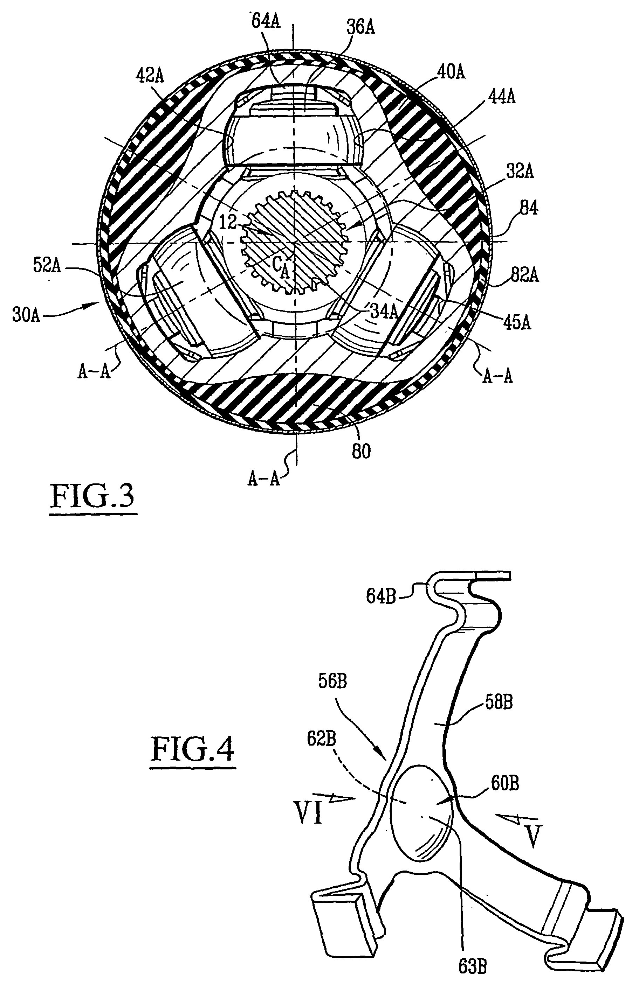

Le corps de double-joint 40 comporte, pour chaque joint coulissant 30A et 30B, un ressort 56A, respectivement 56B, de symétrie ternaire et de forme générale en étoile à trois branches 58A, 58B, comme représenté plus en détail sur la figure 4. La partie centrale de l'étoile 56A, 56B délimite un bombement 60A, 60B de concavité dirigée vers le joint 30B, respectivement 30A, en formant une surface convexe 62A dirigée vers l'arbre menant 10, respectivement une surface convexe 62B dirigée vers l'arbre mené 12, sensiblement sphériques, et une surface concave opposée 63A, respectivement une surface concave opposée 63B. L'extrémité libre de chaque branche 58A, 58B comporte une butée élastique 64A, 64B de retenue axiale selon l'axe X'-X' du ressort 56A, 56B, cette butée se présentant sous la forme de pliures de l'extrémité libre de la branche. Les butées 64A et 64B des ressorts 56A et 56B sont respectivement reçues dans une rainure 66 ménagée sur la périphérie intérieure de la double tulipe 40.

Ces ressorts 56A et 56B sont adaptés pour maintenir suivant l'axe X'-X' de double-tulipe les joints élémentaires 30A et 30B en absorbant leurs raccourcissements respectifs. En d'autres termes, ces ressorts 56A et 56B sont à même de maintenir, par rapport à un plan Pₒ contenant le centre d'articulation 0 et parallèle au plan de jonction P des deux tulipes 40A et 40B, les plans P et Pₒ étant confondus sur les figures 2 et 8, d'une part le centre C_{A} du joint 30A à une distance donnée Lα_{A} fonction de l'angle de brisure α_{A} du joint 30A formé par l'axe X-X et l'axe X'-X' (figure 8), et d'autre part le centre C_{B} du joint 30B à une distance donnée Lα_{B} fonction de l'angle de brisure α_{B} du joint 30B formé par l'axe Y -Y et l'axe X'-X'.

Chaque ressort 56A, 56B est de façon optionnelle pourvu d'un insert 68A, 68B en matière plastique. Chaque insert a une forme générale de coupelle, sensiblement de même concavité que le bombement central 60A, 60B du ressort correspondant 56A, 56B, et est destiné à être placé entre le ressort et l'extrémité associée de l'arbre menant 10 ou mené 12.

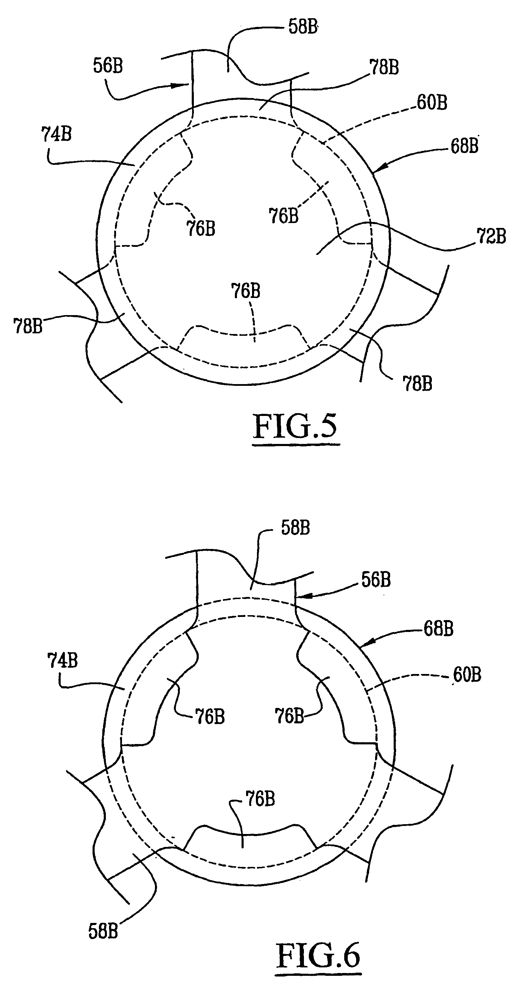

L'insert 68B va ci-dessous être décrit en détail en regard des figures 5 à 7, étant entendu que l'insert 68A possède des aménagements analogues référencés par le même numéro suivi de la lettre A.

Du côté tourné vers le joint élémentaire 30A, l'insert 68B présente une surface bombée convexe 70B de contact avec la surface concave 63B du ressort en étoile 56B. Du côté opposé, l'insert présente une surface 72B de contact avec l'extrémité de l'arbre 10. Ces surfaces de contact 70B et 72B sont de formes sensiblement complémentaires respectivement de la surface 63B formée par le bombement 60B et de la surface d'extrémité 73B de l'arbre 10.

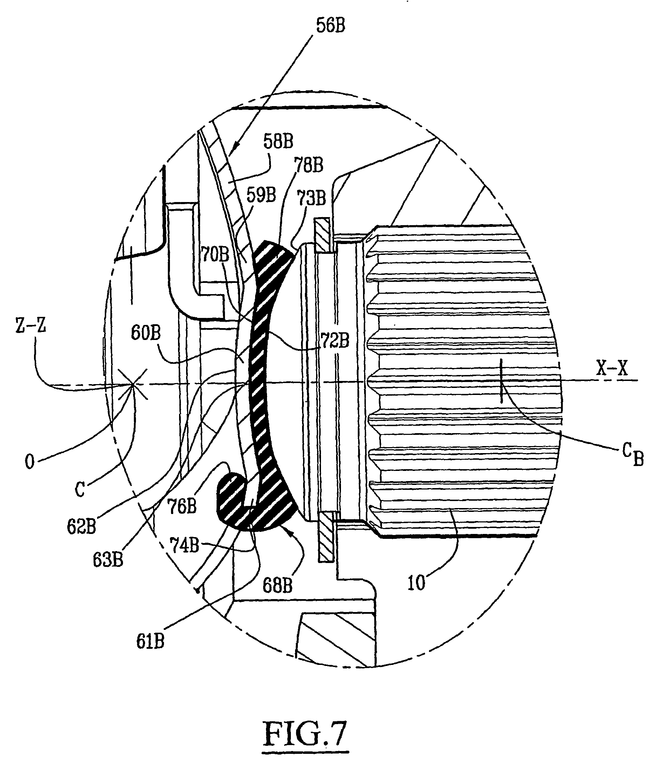

L'insert 68B est pourvu d'un rebord périphérique 74B adapté pour fixer l'insert au ressort 56B. Le rebord 74B comporte à cet effet trois lèvres élastiques 76B, disposées de façon diamétralement opposée à chacune des trois branches 58B du ressort. Les lèvres 76B entourent le bord périphérique 61B du bombement 60B (figure 7), permettant ainsi de clipser l'insert sur le ressort et d'assurer le centrage et la retenue axiale et radiale de l'insert par rapport à l'axe X-X. Au niveau des parties 59B des branches 58B qui se raccordent au bombement 60B, le rebord 74B forme des languettes souples 78B en surépaisseur qui recouvrent en partie ces parties de branches. Les trois lèvres 76B et les trois languettes 78B alternent sur la périphérie de l'insert.

Les lèvres 76B et les languettes 78B sont formées de façon à ce que la longueur circonférentielle de chaque lèvre, c'est-à-dire environ la distance périphérique séparant deux languettes, soit sensiblement égale à la distance périphérique séparant deux branches 58B du ressort 56B. De la sorte, les lèvres 76B coopèrent avec les chants des branches du ressort pour assurer le blocage en rotation de l'insert par rapport au ressort, à un faible jeu près.

Dans le mode de réalisation décrit jusqu'ici, l'insert est réalisé en matière synthétique thermoplastique, comprenant par exemple essentiellement du polyamide, du molybdène et des fibres de verre courtes destinées à renforcer la tenue mécanique de l'insert, notamment en compression.

Le double-joint 30 comporte en outre des moyens d'étanchéité. Ces moyens d'étanchéité comprennent d'une part un manchon en caoutchouc 80 trilobé sur sa surface intérieure et emmanché serré sur la double tulipe 40. Ils comprennent d'autre part, pour chaque joint élémentaire 30A, 30B, un soufflet souple 82A, respectivement 82B de section circulaire, par exemple en thermoplastique. Une extrémité de ce soufflet 82A, respectivement 82B, est fixée de façon étanche sur l'arbre 12, respectivement 10, tandis que l'autre extrémité est fixée de façon étanche sur la tulipe élémentaire 40A, respectivement 40B, en pressant la surface extérieure, à section circulaire, du manchon en caoutchouc 80. Les soufflets sont étanchés par exemple par l'intermédiaire de bagues rétreintes 84.

Le fonctionnement de l'essieu selon l'invention est le suivant.

Sous brisure nulle, c'est-à-dire lorsque les axes X-X et Y-Y des arbres 10 et 12 sont sensiblement coaxiaux, la transmission de couple s'effectue depuis l'arbre menant 10 à l'arbre mené 12 de manière homocinétique, comme pour des essieux moteurs-directeurs relevant de l'art antérieur.

Lorsque l'essieu 1 est brisé pour permettre le braquage des roues 2, la mâchoire 24 pivote autour de l'axe Z-Z sous l'action de l'organe de commande 4, par rapport à la mâchoire 22, de sorte que l'axe Y-Y de l'arbre 12 forme un angle de brisure β avec l'axe X-X de l'arbre 10, comme représenté sur la figure 8.

Dans la mesure où les arbres 10 et 12 sont axialement retenus le long de leurs axes respectifs X-X et Y-Y, le triangle OC_{A}C_{B} est sensiblement isocèle de sommet O, de sorte que les angles α_{A} et α_{B} sont sensiblement égaux, leur somme étant égale à l'angle de brisure β comme indiqué sur la figure 8, assurant ainsi une transmission sensiblement homocinétique.

Plus précisément, les ressorts 56A et 56B sont pressés par les extrémités correspondantes des arbres 10 et 12 puisque ces derniers sont axialement fixes au niveau de leurs extrémités opposées respectives 11 et 13, l'arbre 10 étant solidaire du planétaire 9 et l'arbre 12 étant solidaire de la fusée 18 par l'intermédiaire du manchon 16. Par coulissement du joint 30A suivant l'axe de double-joint X'-X', la distance entre le centre C_{A} du joint 30A et le plan P_{O} passe de la valeur LA de la figure 2 à la valeur Lα_{A} de la figure 8, la différence entre les valeurs LA et Lα_{A} correspondant au raccourcissement intérieur R_{A} qu'intègre le joint élémentaire 30A.

De façon concomitante et par répartition sensiblement symétrique des efforts par l'intermédiaire des ressorts 56A, 56B et de la double-tulipe 40 fixe suivant son axe X'-X', le joint élémentaire 30B coulisse suivant l'axe X'-X' et est raccourci d'une valeur R_{B} = L_{B} - Lα_{B}, sensiblement égale à R_{A}.

De cette façon, la transmission de couple par l'essieu 1 est sensiblement homocinétique pour toute valeur admissible de l'angle de brisure β. L'essieu selon l'invention possède ainsi un comportement mécanique en transmission améliorée par rapport aux essieux connus.

Le double-joint de l'essieu selon l'invention intègre ainsi dans son fonctionnement le raccourcissement R de l'essieu dû au braquage des roues et inhérent à tout essieu moteur-directeur, ce raccourcissement R étant réparti entre les raccourcissements intérieurs R_{A} et R_{B} des joints coulissants 30A et 30B.

Il est alors possible de supprimer les liaisons coulissantes au niveau des extrémités 11, 13 opposées à celles reliées par des doubles-joints relevant de l'art antérieur. Par exemple, pour l'essieu moteur-directeur 1 de la figure 1, ni le différentiel 6, ni la fusée de roue 18 ne nécessite d'aménagements à liaisons coulissantes vis-à-vis de leur arbre respectif 10 et 12, ce qui permet de rigidifier davantage les liaisons arbre menant/différentiel et arbre mené/roue. Les bruits et l'usure de l'essieu selon l'invention s'en trouvent réduits et les moyens d'étanchéité s'en trouvent simplifiés.

Sous angle, l'essieu selon l'invention autorise une transmission sensiblement plus importante du couple, pour un encombrement radial et diamétral performant pour un ensemble sensiblement homocinétique. Son angularité maximale se situe autour de 55° par exemple.

De plus, les inserts 68A et 68B placés entre les ressorts 56A, 56B et les extrémités des arbres 10, 12 correspondantes améliorent le fonctionnement du double-joint 30. En effet, en l'absence de ces inserts, les surfaces 62A et 62B des ressorts 56A et 56B seraient directement en contact avec les extrémités d'arbres. Le raccourcissement de braquage étant supporté par la déformation des ressorts, au fur et à mesure que l'angle β de braquage augmente, la pression appliquée sur ces ressorts par les arbres 10 et 12 est croissante et les zones de contact entre les ressorts et les arbres ont tendance à se réduire. Cette augmentation de pression localisée, combinée, lors du fonctionnement du double-joint, à la centrifugation de la graisse contenue à l'intérieur du manchon 80, entraîne un manque de lubrification des zones de contact à l'extrémité des arbres 10 et 12. En l'absence des inserts 68A et 68B, cette carence en lubrification risque d'entraîner des élévations de température impliquant des dégradations des surfaces en contact, voire de grippage du double-joint, une érosion prématurée de la partie centrale des ressorts, ou une pollution du lubrifiant, une réduction de la valeur de charge initialement imposée aux ressorts lors du montage du double-joint, des bruits de frottement, etc...

Par contre, en dépit de ce manque local de lubrification, le montage des inserts 68A et 68B assure à la fois :
- une excellente résistance à l'usure ;
- une diminution de l'érosion des extrémités d'arbre ;
- une absorption des bruits et des vibrations de fonctionnement ;
- une bonne conformité des surfaces en contact, notamment par usure superficielle de la matière plastique des inserts, d'où une augmentation des surfaces d'application des pressions, même pour des angles de braquage importants ;
- une résultante pression x vitesse très supérieure à celle obtenue par un contact acier/acier ; et
- une diminution du volume de lubrifiant nécessaire, d'où la réduction de la masse du double-joint 30.

Par ailleurs, pour un double-joint comportant deux joints élémentaires individuellement homocinétiques comme dans le premier mode de réalisation décrit jusqu'ici en regard des figures 1 à 8, une tolérance d'écart de construction et/ou d'installation est acceptable et sans conséquence cinématique. Par exemple, un écart de positionnement relatif des tulipes élémentaires 40A et 40B reste compatible avec un comportement mécanique de l'essieu selon l'invention acceptable pour permettre une transmission sensiblement homocinétique satisfaisante, les variations angulaires des angles α_{A} et α_{B} étant relativement faibles. De même, il est rappelé que les arbres 10 et 12 peuvent ne pas être rigoureusement coplanaires sans pour autant limiter significativement les performances de l'essieu selon l'invention.

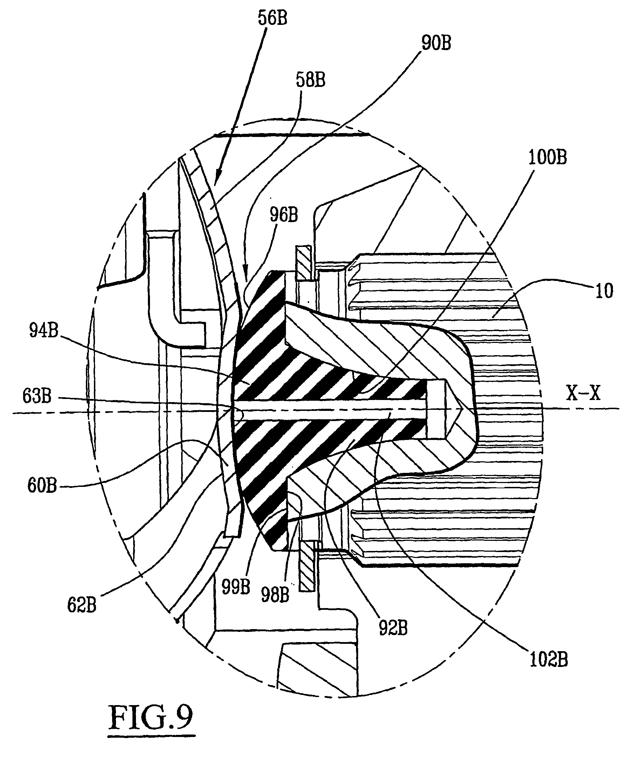

Sur la figure 9 est représentée une variante de réalisation de l'insert en matière plastique interposé entre le ressort 56B et l'arbre 10. Bien que décrit en référence avec le joint élémentaire 30B, de tels aménagements de variante sont envisageables de façon symétrique pour le joint 30A.

La variante de la figure 9 consiste à munir l'extrémité de l'arbre 10 d'un insert 90B en forme de champignon, comportant un corps allongé 92B et une tête 94B à calotte sphérique. Cette tête présente, du côté dirigé vers le joint élémentaire 30A, une surface convexe 96B, sensiblement complémentaire de la surface concave 63B du ressort 56B. Du côté tourné vers l'arbre 10, la tête 94B forme une surface 98B sensiblement plane adaptée pour prendre appui sur une partie de surface d'extrémité 99B sensiblement plane de l'arbre 10.

L'insert 90B est solidarisé à l'arbre 10 par emmanchement à force et serrage de son corps 92B à l'intérieur d'un trou borgne convergent 100B ménagé à l'extrémité de l'arbre 10. Un trou traversant 102B, d'axe sensiblement confondu avec l'axe X-X lorsque l'insert est solidarisé à l'arbre, est formé le long de l'insert 90B et permet l'échappement de l'air résiduel présent à l'intérieur du trou 100B lors de l'emmanchement de l'insert.

Pour cette variante, la zone de contact entre les surfaces 63B et 96B, c'est-à-dire la zone de contact entre le ressort 56B et l'insert 90B, est optimisée dans le sens où cette zone de contact est la plus importante possible pour toute la plage d'angularité de brisure du double-joint 30.

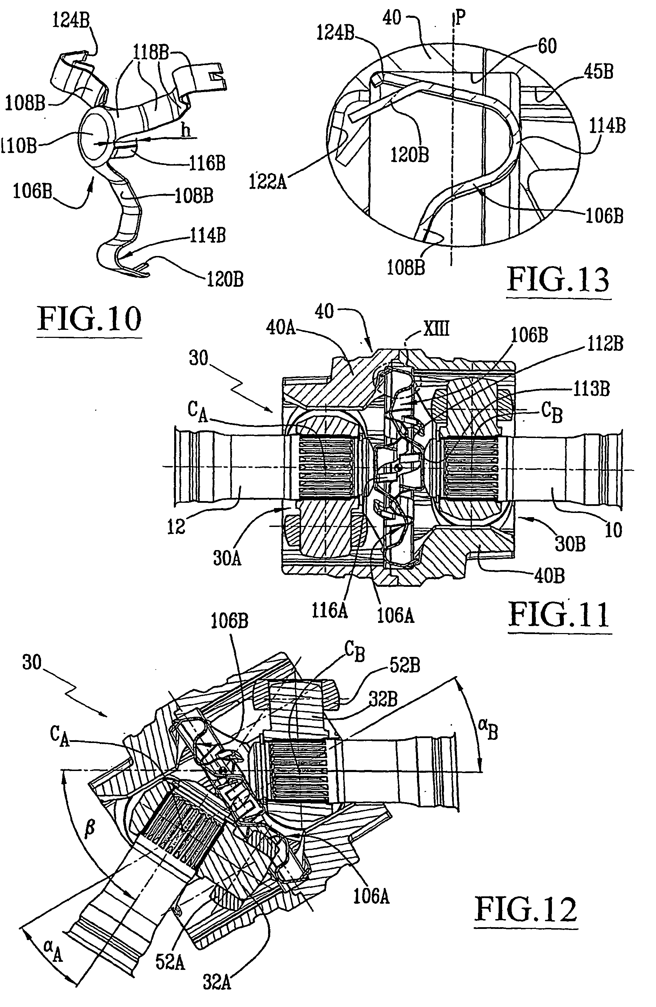

Sur les figures 10 à 13 est représentée une variante des ressorts en étoile 56A, 56B des figures précédentes, référencés 106A et 106B, et conçus pour être montés avec le double-joint 30 de l'essieu 1. Par la suite, seul le ressort 106B sera décrit en détail, étant entendu que le ressort 106A présente des aménagements analogues référencés par le même numéro suivi de la lettre A.

De manière sensiblement analogue au ressort 56B, le ressort 106B est de symétrie ternaire et comporte trois branches 108B qui s'étendent depuis un bombement central 110B portant à la fois une face convexe 112B et une face opposée concave 113B destinée à former une surface d'appui pour l'extrémité de l'arbre 12 reliée par le double-joint 30. L'extrémité libre de chaque branche 108B forme une butée élastique 114B adaptée pour être reçu dans la rainure 66 du corps de double-joint 40. Le ressort 106B se distingue du ressort 56B par ce qui suit.

D'abord, le ressort 106B comporte trois ergots 116B qui s'étendent depuis la périphérie du bombement central 110B du côté de sa face convexe 112B, suivant sensiblement la même direction que celle des branches 108B. La longueur de ces ergots, c'est-à-dire la distance séparant leur extrémité libre de la périphérie du bombement 110B est notée h. L'intérêt de ces ergots sera expliqué lors de la description de l'assemblage de l'essieu 1.

Ensuite, chaque branche 108B est formée de plusieurs segments consécutifs 118B, obtenus par pliage de la branche. Les angles formés entre deux segments consécutifs sont choisis de sorte que les branches 108B n'entrent pas en contact avec les galets 52B du tripode 32B, même lorsque le double-joint fonctionne à l'état brisé comme sur la figure 12.

De plus, l'extrémité libre de chaque branche 108B porte une languette 120B, découpée et pliée en étant dirigée vers l'intérieur du double-joint. Chacune de ces languettes est adaptée pour être reçue à l'intérieur d'une cavité 122A formée dans le corps 40A du joint élémentaire opposé 30A et débouchant dans la rainure 66, comme représenté sur la figure 13. Les dimensions périphériques de ces languettes et de ces cavités sont sensiblement égales de façon à assurer le blocage angulaire du ressort 106B par rapport au corps de double-joint 40.

Enfin, les extrémités libres des pliures formant la butée radiale élastiques 114B portent une pliure d'extrémité 1248, représentée à grande échelle sur la figure 13. Cette pliure 124B présente un profil en V dont le sommet est dirigé vers l'extérieur du double-joint.

Le fonctionnement de l'essieu 1 pourvu du double-joint 30 des figures 11 et 12 est sensiblement analogue à celui du double-joint des figures 2 et 8. Ces performances sont améliorées dans le sens où les branches 108A, 108B ne gênent pas les mouvements des galets 52A, 52B, même lorsque le double-joint 30 est sous brisure maximale. De plus, les languettes 120B empêchent tout glissement circonférenciel des ressorts 106A, 106B entraînés par les frottements générés par des mouvements orbitaux, couramment appelés mouvements d'« offset » des extrémités des arbres 10 et 12 reliées par le double-joint par rapport aux surfaces 113A, 113B des bombements centraux 110A, 110B des ressorts, et/ou par des mouvements massiques et gyroscopiques du corps de double-joint 40 en rotation.

L'essieu 1 pourvu du double-joint 30 des figures 11 et 12 présente par ailleurs une montabilité améliorée.

D'une part, les pliures d'extrémités 124A, 124B facilitent l'introduction dans le corps de double-joint 40 des ressorts 106A, 106B, ces derniers étant pour cela élastiquement déformés radialement pour être placés à l'intérieur des parties d'extrémités du corps 40, puis, si nécessaire, pivotés autour de l'axe X'-X' pour positionner angulairement les languettes 120A et 120B de façon qu'elles soient dans le prolongement axial des cavités 122A et 122B, et enfin déplacés axialement vers le plan médian P du corps de double-joint en faisant glisser les sommets des pliages 124A, 124B sur les voûtes 45A et 45B du corps 40.

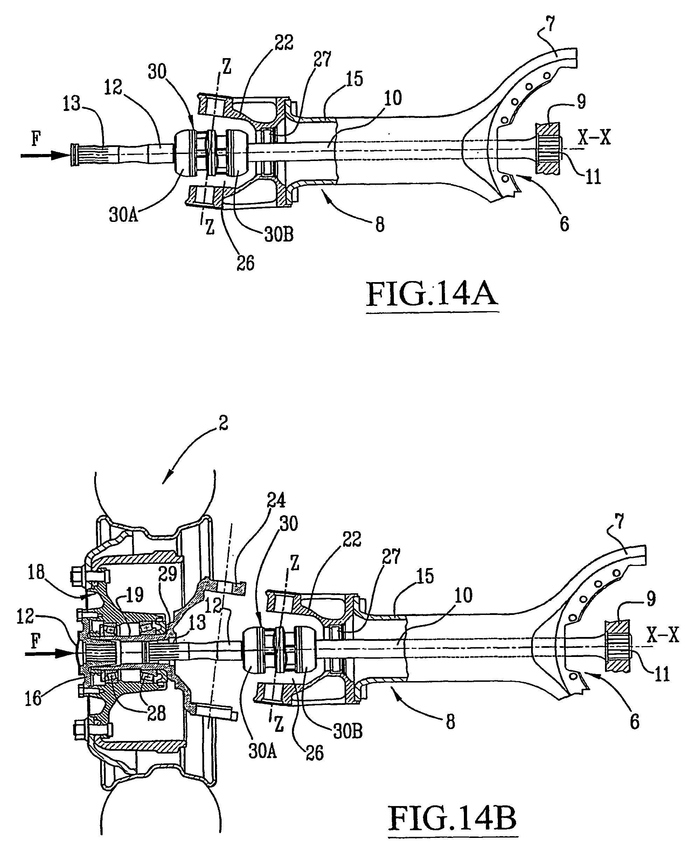

D'autre part, l'assemblage d'une des lignes de transmission 8 de l'essieu 1, représenté dans différents états successifs sur les figures 14A à 14C, est le suivant. D'abord, un ensemble dit « central », formé des deux arbres 10 et 12 et du double-joint 30, est introduit successivement à l'intérieur de la mâchoire 22, du palier 27, de la trompette 15 et du carter d'essieu 7 jusqu'à ce que l'extrémité cannelée 11 de l'arbre 10 soit reçue dans l'alésage broché du planétaire 9 du différentiel 6. Pour parvenir à la mise en place de cet ensemble central, un effort axial F est exercé sur l'extrémité libre 13 de l'arbre 12.

Puis un ensemble dit «extérieur», formé de la roue 2 et de la mâchoire 24 solidaire du moyeu 19, est ensuite présenté sur l'extrémité cannelé 13 de l'arbre 12, en introduisant cette extrémité d'arbre à l'intérieur du palier 29, comme représenté sur la figure 14B. L'ensemble extérieur est ensuite déplacé jusqu'à la mise en prise des cannelures d'extrémité de l'arbre 12 dans l'alésage broché du manchon 16 solidarisé au moyeu 19, en exerçant de nouveau un effort d'emmanchement F, par exemple d'intensité égale à l'effort exercé pour l'emmanchement de l'ensemble central.

Les ensembles central et extérieur sont ensuite solidarisés par la mise en place des tourillons 20A et 20B suivant l'axe de pivot Z-Z et la mâchoire 24 est connectée aux organes 4 de commande directionnelle des roues 2.

Enfin, le positionnement radial et l'arrêt axial des joints élémentaires coulissants 30A et 30B du double-joint 30 sont assurés par la mise en place des organes de fixation 17 au niveau des extrémités 11 et 13 des arbres 10 et 12, ainsi que, si nécessaire, par des organes de fixation complémentaires non représentés au niveau des paliers 27 et 29.

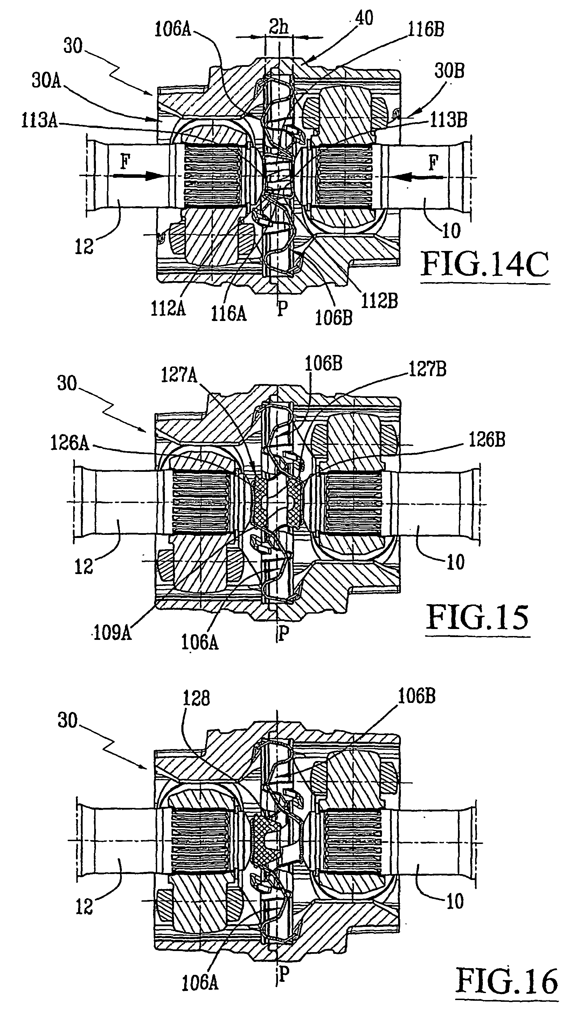

On comprend que, lors de l'application des efforts d'emmanchement F, les ressorts en étoile 106A et 106B du double-joint sont déformés. Si l'intensité de ces efforts F est supérieure à l'effort maximal admissible en fonctionnement pour lesquels ces ressorts ont été dimensionnés, les ressorts 106A et 10B sont déformés au point d'amener à la fois les ergots 116A en contact avec la surface convexe 112B du ressort 106B, et les ergots 116B en contact avec la surface convexe 112A du ressort 106A, comme représenté sur la figure 14C. La distance axiale séparant alors les surfaces 112A et 112B vaut 2h.

Les ergots 116A et 116B forment de la sorte des organes d'arrêt suivant l'axe X'-X' des ressorts 106A et 106B, capables de supporter des efforts d'assemblage de l'essieu 1 bien supérieurs à la charge maximale admissible en fonctionnement par ces ressorts, sans courir le risque de déformer de façon permanente les branches 108A et 108B.

En variante, un tel organe d'arrêt est formé, pour chaque ressort 106A, 106B, par une butée rigide 126A, 126B placé contre la face convexe 112A, 112B du ressort correspondant et de manière symétrique au plan médian P, comme représenté sur la figure 15. La dimension axiale maximale de chaque butée est égale à environ h. Chaque butée rigide est par exemple réalisée en matière thermoplastique et est clipsée par des rendants 127A, 127B sur les parties 109A, 109B des branches 108A, 108B se raccordant au bombement central 110A, 110B.

Une autre variante représentée sur la figure 16 consiste à ne recourir qu'à une seule butée rigide 128, de dimension axiale maximale égale à environ 2h, et solidarisée à l'un ou à l'autre des ressorts 106A, 106B.

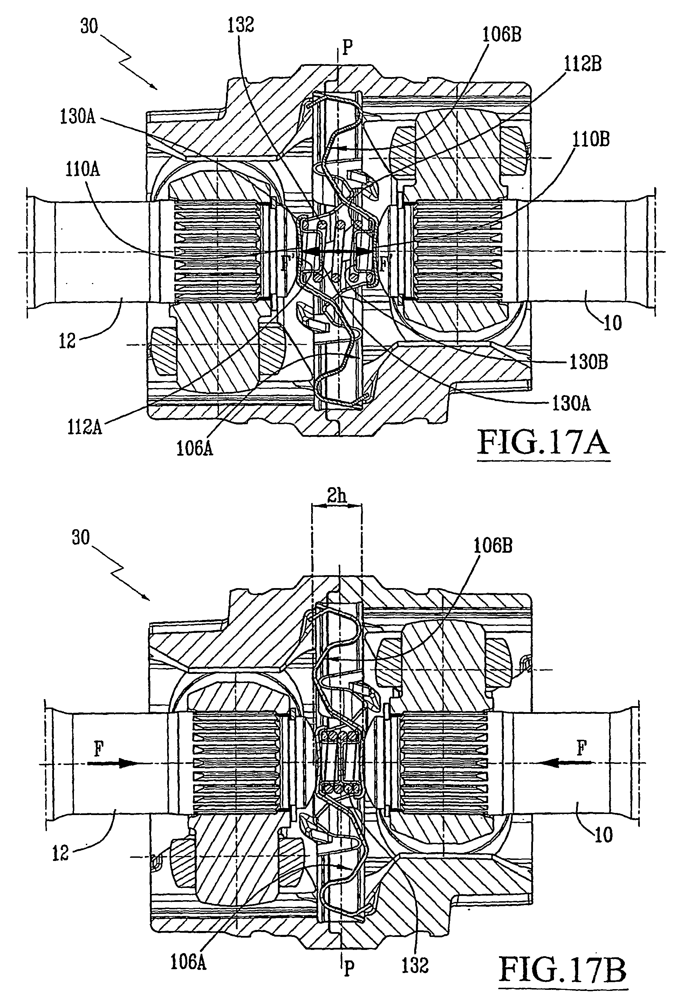

Sur les figures 17A et 17B est représentée une variante des ressorts 106A, 106B, qui ne se distinguent des ressorts des figures 10 à 13 que par, d'une part, le remplacement des ergots d'arrêt 116A, 116B par une cupule métallique 130A, 130B solidarisée, par exemple par soudage, à la face convexe 112A, 112B des bombements centraux 110A, 110B de chaque ressort, et, d'autre part, par la présence d'une pièce supplémentaire, à savoir un ressort hélicoïdal de compression 132 disposé de façon sensiblement coaxiale à l'axe X'-X' entre les faces convexes des ressorts. Avantageusement, le diamètre extérieur maximal des cupules 130A, 130B et le diamètre intérieur du ressort 132 sont choisis de façon à caler radialement chacune des parties d'extrémité des ressorts entre une des cupules et les branches 108A, 108B du ressort en étoile correspondant.

Le ressort hélicoïdal 132 est adapté pour exercer des efforts de compression F' parallèles à l'axe X'-X' et dirigés vers l'extérieur du double-joint 30. De la sorte, lors de l'assemblage de l'essieu comme expliqué plus haut, ces efforts F' s'opposent aux efforts d'emmanchement F. De plus, en fonctionnement du double-joint, le ressort hélicoïdal 132 tend à plaquer les ressorts en étoile 106A, 106B sur les extrémités des arbres 10 et 12 reliées par le double-joint, augmentant ainsi la raideur en flexion des branches 108A, 108B. L'addition des efforts de compression des ressorts en étoile et du ressort hélicoïdal renforce le blocage axial des arbres 10 et 12 par rapport respectivement au planétaire 9 et au manchon 16, de sorte que d'une part la mise en place d'éléments complémentaires de fixation référencés précédemment 17, tels que des vis, des écrous ou des circlips, peuvent devenir inutiles, réduisant ainsi le nombre de composants et le nombre d'étapes d'assemblage, et d'autre part les jeux axiaux naturels issus des paliers 27 et 29, responsables de nuisances vibratoires, sont contenus.

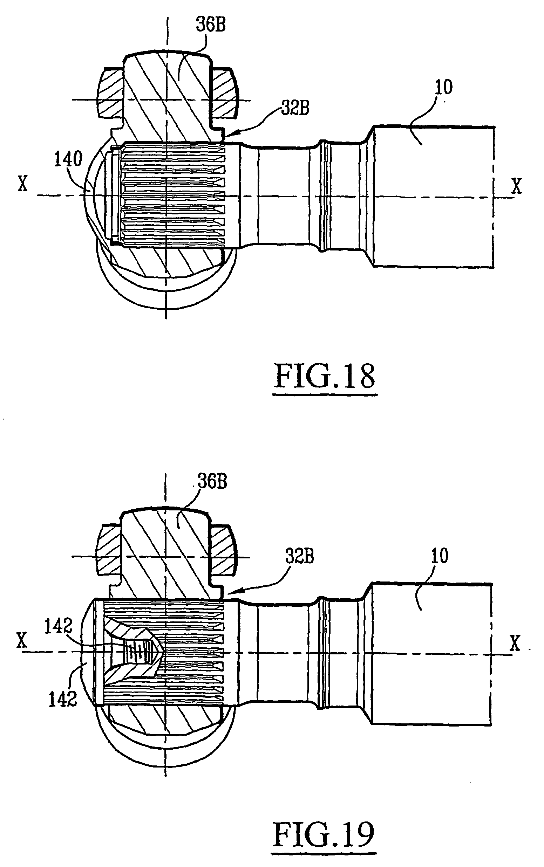

Sur les figures 18 et 19 sont représentées respectivement deux variantes de réalisation de l'extrémité de l'arbre 10 en appui sur le ressort 56B. Bien que décrit en référence avec le joint élémentaire 30B, de tels aménagements de variante sont envisageables de façon symétrique pour le joint 30A.

La variante de la figure 18 consiste à munir l'extrémité de l'arbre 10 d'un tripode 32B et d'une calotte 140 sensiblement sphérique et centrée suivant l'axe X-X de l'arbre 10. La calotte d'extrémité 140 est de forme extérieure sensiblement complémentaire à celle, soit de la surface concave 63B du bombement 60B du ressort 56B pour un ressort dépourvu d'insert, soit de la surface concave 72B de l'insert 68B pour un ressort pourvu de cet insert.

La variante de la figure 19 se distingue du mode de réalisation représenté sur la figure 2 par le fait que l'extrémité de l'arbre 10 est munie solidairement d'un pion 141 centré sur l'axe X-X et pourvu d'une tête à calotte sphérique 142. Cette calotte d'extrémité 142 est elle aussi de forme extérieure sensiblement complémentaire à celle du bombement 60B du ressort 56B ou de l'insert 68B.

Pour ces deux variantes des figures 18 et 19, la zone de contact ménagée entre le ressort d'appui 56B ou son insert 68B et la calotte d'extrémité 140, respectivement142, est optimisée, dans le sens où cette surface d'appui est la plus importante possible pour toute la plage d'angularité de brisure du double-joint.

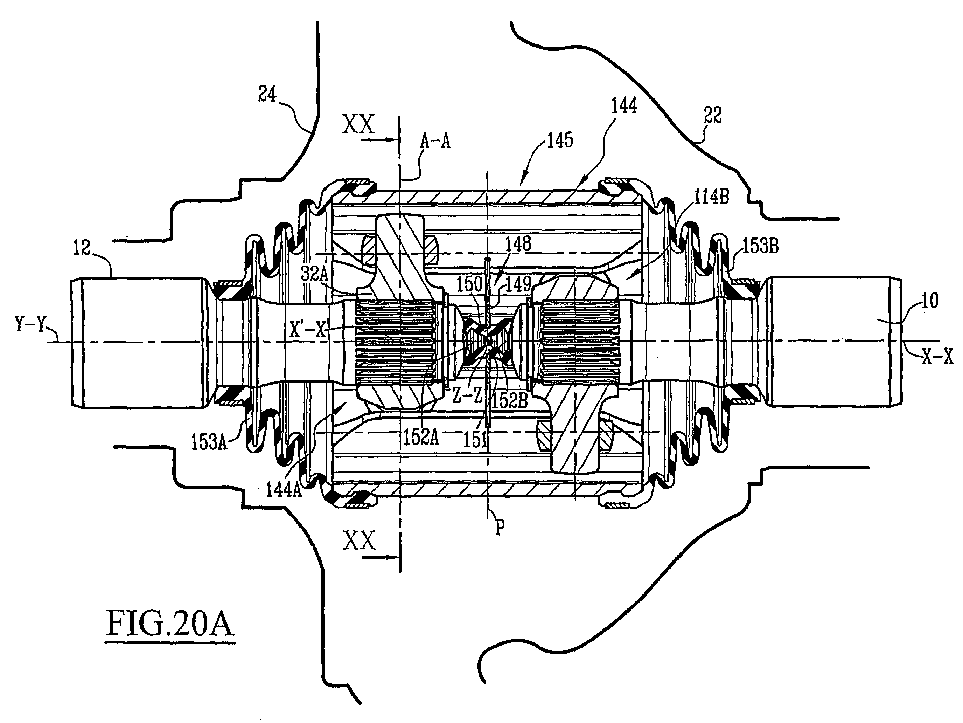

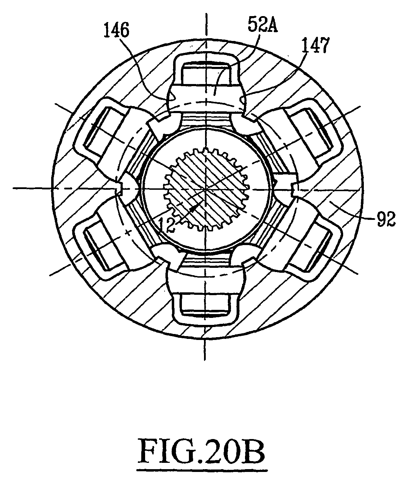

Sur les figures 20A et 20B est représentée une première variante de réalisation d'un double-joint 144 de l'essieu selon l'invention. Ce double-joint 144 ne se distingue du double-joint 30 des figures 2 à 8 que par ce qui suit, ses éléments communs avec le double-joint 30 portant les mêmes références.

Le double-joint 144 comporte deux joints élémentaires 144A et 144B, tous deux individuellement homocinétiques à tripode et coulissants. Par la suite, seules les pièces du joint 144A différentes de celles du joint 30A vont être décrites plus en détail, les pièces du joint 144B s'en déduisant par substitution de la lettre A par la lettre B.

Le double-joint 144 comporte un corps de double-joint ou double-tulipe 145 d'axe X'-X' formé des deux tulipes élémentaires des joints élémentaires 144A et 144B, lesquelles tulipes élémentaires sont juxtaposées de part et d'autre du plan de jonction P. Plus précisément, la double-tulipe 145 est de symétrie de degré 6 par rapport à l'axe X'-X' : elle est de périphérie extérieure sensiblement circulaire et délimite intérieurement six paires de pistes 146, 147 en vis-à-vis, une paire de pistes sur deux étant associée respectivement aux trois bras 36A du tripode 32A du joint 144A, et les paires de pistes restantes étant associées respectivement aux trois bras 36B du tripode 32B du joint 144B.

Le corps de double-joint 145 comporte des moyens 148 de maintien axial suivant son axe X'-X' des joints élémentaires 144A et 144B. Ces moyens 148 comportent d'une part une plaque rigide 149 s'étendant suivant le plan P et fixée intérieurement à la double-tulipe 145. Cette plaque 149 comporte une perforation 150 sensiblement coaxiale à l'axe du double-joint X'-X'.

Les moyens 148 comportent d'autre part une butée 151 en caoutchouc de forme générale cylindrique et s'étendant à l'intérieur de la perforation 150 selon l'axe X'-X'. Le diamètre extérieur de cette butée 151 est supérieur au diamètre de la perforation 150, de sorte que des renflements de matière de la butée s'étendent sur une partie des parois de la plaque 149 dans la zone de sa perforation 150. De cette façon, la butée 151 est solidairement fixée à la plaque 149. Les tranches d'extrémité de la butée 151 sont en appui sur les extrémités respectives des arbres 10 et 12, suivant des surfaces concaves de contact 152A, respectivement 152B, de fonction analogue soit aux surfaces 63A, 63B pour le double-joint 30 dépourvu d'insert, soit aux surfaces 72A, 72B pour le double-joint 30 pourvu des inserts 68A et 68B.

Le double-joint 144 comporte en outre des moyens d'étanchéité comprenant pour chaque joint élémentaire 144A, 144B, un soufflet convergent à plis circulaires 153A, respectivement 153B. Une extrémité de chaque soufflet est fixée sur l'arbre correspondant 10 ou 12, tandis que l'autre extrémité est fixée de façon étanche sur la surface extérieure à section circulaire de la double-tulipe 145.

Le fonctionnement de l'essieu avec le double-joint 144 est sensiblement analogue à celui de l'essieu avec le double-joint 30.

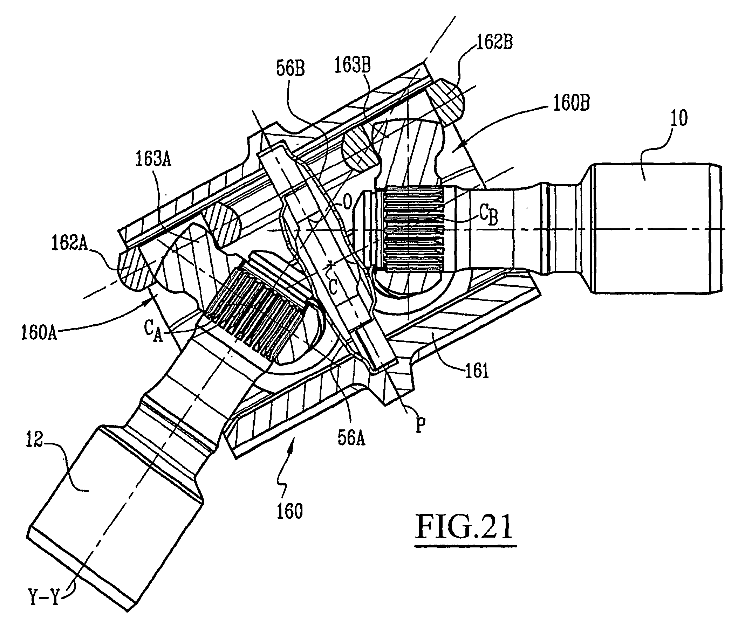

Sur la figure 21 est représentée une seconde variante d'un double-joint 160, à deux joints élémentaires 160A, 160B, de l'essieu selon l'invention, qui ne se distingue du double-joint 30 de la figure 2 que par ce qui suit.

Contrairement au mode de réalisation décrit en regard de la figure 2, les deux tulipes élémentaires 161A, 161B formant une double-tulipe 161 d'axe X'-X' sont positionnées à déphasage nul, c'est-à-dire que chaque paire de pistes de la tulipe élémentaire 161A est placée sensiblement dans le prolongement d'une paire de pistes de la tulipe élémentaire 161B.

De plus, les moyens 50A, 50B de transmission mécanique de chaque bras 36A, respectivement 36B comportent des galets extérieurs 162A, respectivement 162B de forme extérieure torique pour rouler sur la paire de pistes correspondante de la double-tulipe 161, lesquels galets sont montés rotulants sur l'extrémité libre de chaque bras formant un tourillon 163A, respectivement 163B sensiblement sphérique.

Enfin, les ressorts 56A, 56B, bien que remplissant les mêmes fonctions que celles du mode de réalisation de la figure 2, sont de formes légèrement différentes afin de tenir compte de la géométrie intérieure de la double-tulipe 161.

Le fonctionnement de ce double-joint 160 est sensiblement analogue à celui du double-joint 30 de la figure 2.

Cette variante homocinétique a pour effet de supprimer les éventuelles oscillations de la droite reliant les centres C_{A}, C_{B} des joints élémentaires autour du centre C du double-joint, ce qui est dû au phénomène couramment désigné sous le terme général de mouvement d'offset lorsqu'un joint de type tripode fonctionne sous angle. Au contraire, pour le double-joint 160, cette droite C_{A}C_{B} reste parallèle à l'axe X'-X' de la double-tulipe 161, générant éventuellement un balourd négligeable.

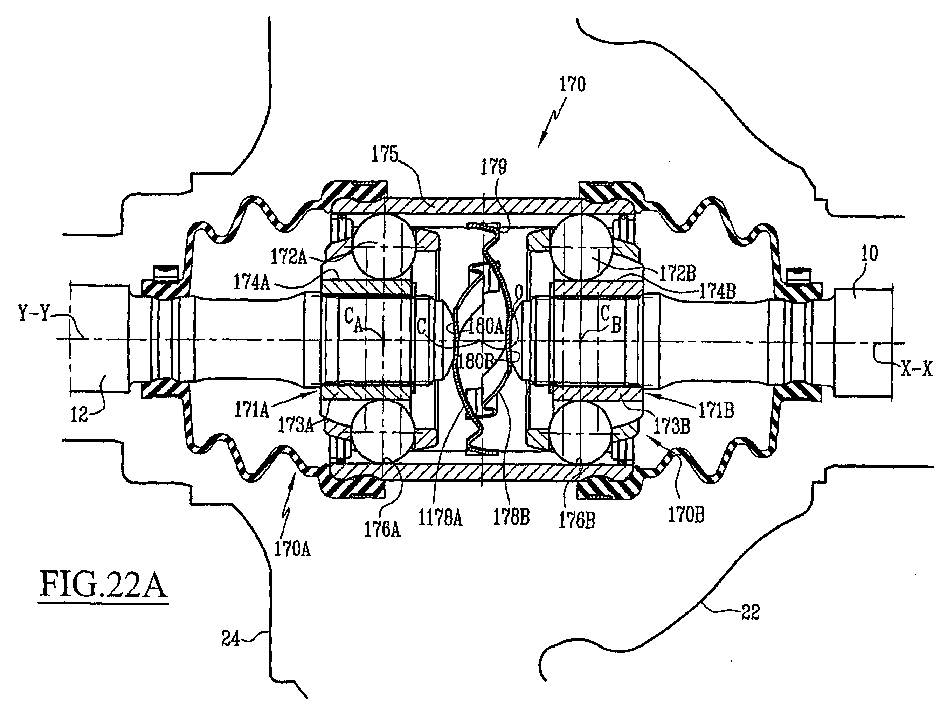

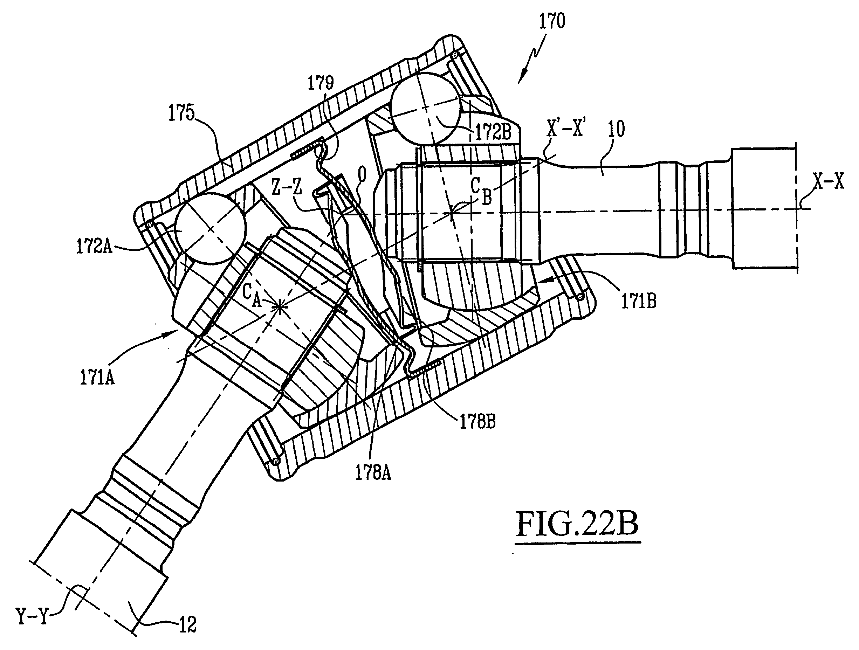

Sur les figures 22A et 22B, est représentée une troisième variante d'un double-joint 170 de l'essieu selon l'invention, reliant les arbres menant 10 et mené 12.

Ce double-joint 170 comporte deux joints élémentaires à billes 170A et 170B , individuellement coulissants et homocinétiques. Chaque joint à billes comporte, aux extrémités respectives des arbres 12 et 10, une partie mâle 171A, 171B de structure connue, et six billes d'entraînement 172A, 172B. La partie mâle 171A comprend une noix intérieure 173A extérieurement sphérique, à six gorges 174A.

Le double-joint 170 comporte un corps de double-joint 175, formant la partie femelle des parties mâles respectives des joints élémentaires 170A et 170B. A cet effet, le corps de double-joint présente intérieurement six paires de pistes 176A, 176B de roulement des billes 172A, 172B, parallèles à l'axe du corps 175. Les pistes de roulement 176A d'un joint élémentaire sont dans le prolongement des pistes de roulement 176B de l'autre joint élémentaire.

De plus, le double-joint 170 comporte des ressorts en étoile 178A, 178B d'ajustement des coulissements respectifs des joints élémentaires 170A, 170B. Ces ressorts sont de fonction et de structure sensiblement analogues à celles des ressorts 56A, 56B du double-joint 30 des figures 2 à 8. Ils sont notamment en appui sur le corps de double-joint 175 par l'intermédiaire d'une rainure circulaire 179 ménagée sur la périphérie intérieure du corps du double-joint, et comportent chacun une zone 180A, 180B d'appui pour les extrémités des arbres 12 et 10 reliées par le double-joint 170.

Le fonctionnement de l'essieu muni de ce double-joint 170 est sensiblement analogue à celui de l'essieu de la figure 2.

Une autre variante non représentée du double-joint de l'essieu selon l'invention consiste en un double-joint à deux joints élémentaires à engrenage axial. Chaque joint élémentaire autorise un mouvement de transmission de couple par deux engrenages en regard qui comportent respectivement des dents axiales s'interpénétrant.

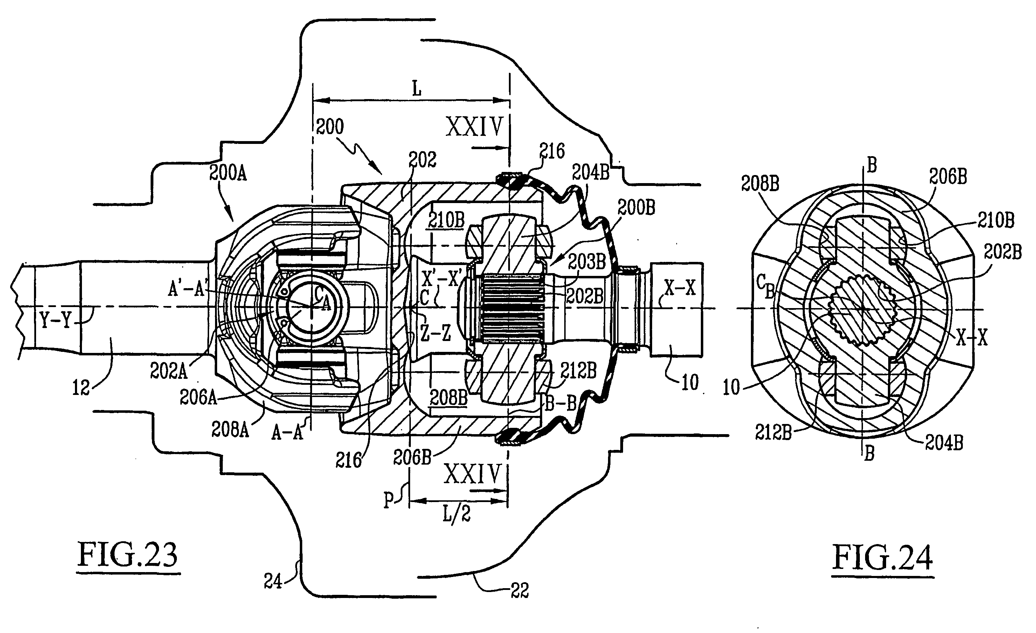

Sur les figures 23, 24, 25A et 25B est représenté un second mode de réalisation d'un double-joint d'essieu selon l'invention.

Contrairement au premier mode de réalisation décrit jusqu'ici où le double-joint de l'essieu selon l'invention était constitué de deux joints élémentaires librement coulissants capable d'encaisser l'un et l'autre le raccourcissement R de braquage de l'essieu 1, ce deuxième mode de réalisation consiste à former un double-joint avec un seul joint élémentaire librement coulissant capable d'encaisser l'intégralité du raccourcissement R.

Sur les figures 23 et 24 est représenté un double-joint homocinétique 200 reliant les arbres 10 et 12 de la figure 1. Ce double-joint 200 définit un centre d'articulation O à l'intersection des axes des arbres menant et mené 10 et 12, lorsque ceux-ci forment un angle de brisure β, comme sur les figures 13A et 13B. Comme dans les autres variantes, le double-joint 200 est positionné, lors de son montage, pour former une articulation selon l'invention, par exemple à l'intérieur de la cavité 26 définie sur la figure 1, de sorte que l'axe de pivot Z-Z de l'articulation passe sensiblement par le centre O du double-joint 200 pour toute valeur de l'angle de brisure β.

Le double-joint 200 comporte un premier joint élémentaire 200A sous forme d'un cardan à croisillons coplanaires, connu en soi. Ce joint à cardan 200A comporte essentiellement un croisillon 202A comprenant une première branche 204A d'axe A-A contenue dans le plan de la figure 23 et perpendiculaire à l'axe Y-Y, et une seconde branche 206A d'axe A'-A' sensiblement perpendiculaire aux axes Y-Y et A-A. L'intersection des axes A-A et A'-A' définit le centre de brisure C_{A} du joint 200A. La première branche 204A est montée rotative par rapport à l'axe Y-Y sur une fourche à brides 208A solidaire de l'arbre 12. La seconde branche 206A est montée également rotative par rapport à l'axe Y-Y sur une fourche à brides 210A.

Le double-joint 200 comporte un second joint élémentaire 200B sous forme d'un joint à bipode coulissant, également connu en soi. Ce joint à bipode possède une cinématique de type Cardan, avantageusement analogue à celle du joint 200A. Le joint 200B présente une symétrie binaire par rapport à l'axe X-X. II comporte un élément mâle ou bipode 202B qui comprend un alésage à cannelures 203B et deux bras radiaux 204B s'étendant en opposition l'un de l'autre et d'axe commun B-B. L'intersection des axes X-X et B-B délimitent le centre de brisure C_{B} du joint 200B. L'alésage à cannelures 202B est adapté pour être emmanché serré sur l'extrémité cannelée 11 de l'arbre 10.

Le joint bipode 200B comprend également un élément femelle 206B de symétrie binaire par rapport à un axe central X'-X', ce dernier axe étant confondu avec l'axe X-X dans la position alignée du joint de la figure 23. De part et d'autre de chaque bras 204B, cette tulipe présente deux pistes cylindriques 208B et 210B en vis-à-vis et, sur chaque bras 2048, est monté coulissant un galet sphérique 212B d'axe de révolution sensiblement confondu avec l'axe B-B, destiné à rouler sur l'une ou l'autre des pistes 208B et 210B correspondantes.

Selon l'invention, la fourche 210A de la branche 206A du joint 200A est solidaire de la tulipe 206B du joint 200B de sorte que ces deux pièces forment un corps de double-joint 202 d'un seul tenant d'axe X'-X'. La fourche 210A et la tulipe 206B sont agencées l'une par rapport à l'autre de telle sorte que l'axe A-A du joint 200A et l'axe B-B du joint 200B sont sensiblement parallèles. Le corps de double-joint 202 définit ainsi un centre C à l'intersection de l'axe X'-X' et d'un plan P, ce dernier étant défini comme le plan à mi-distance des axes A-A et B-B. En position alignée, la distance séparant les centres de brisure C_{A} et C_{B} est notée L (voir figure 23).

Le double-joint 200 comporte également des moyens d'étanchéité de fonction analogue à ceux décrits pour le double-joint 30 de la figure 2. Ces moyens d'étanchéité sont simplifiés pour le joint élémentaire à cardan 200A, ce dernier fonctionnant sans soufflet de retenue d'huile. Pour le joint à bipode 200B, un soufflet plissé 216 fixé de façon étanche à l'arbre 10 au corps du double-joint 202 est prévu, lequel corps 202 peut être, bien que non représenté sur les figures, muni d'un manchon extérieur s'étendant sur toute sa périphérie.

Le fonctionnement du double-joint 200 est sensiblement analogue à celui du double-joint 30 de la figure 2, à la différence que l'un des deux joints élémentaires est fixe, à savoir le joint 200A. La distance séparant le centre d'articulation 0 du centre C_{A} du joint 200A est donc constante par la nature même du joint.

Pour le joint coulissant 200B, la distance séparant son centre C_{B} du centre d'articulation 0 demeure également constante, par l'intermédiaire du corps de double-joint 202, axialement fixe le long de son axe X'-X', puisque ce corps de double-joint 202 est formé en partie de la fourche 210A du joint fixe 200A.

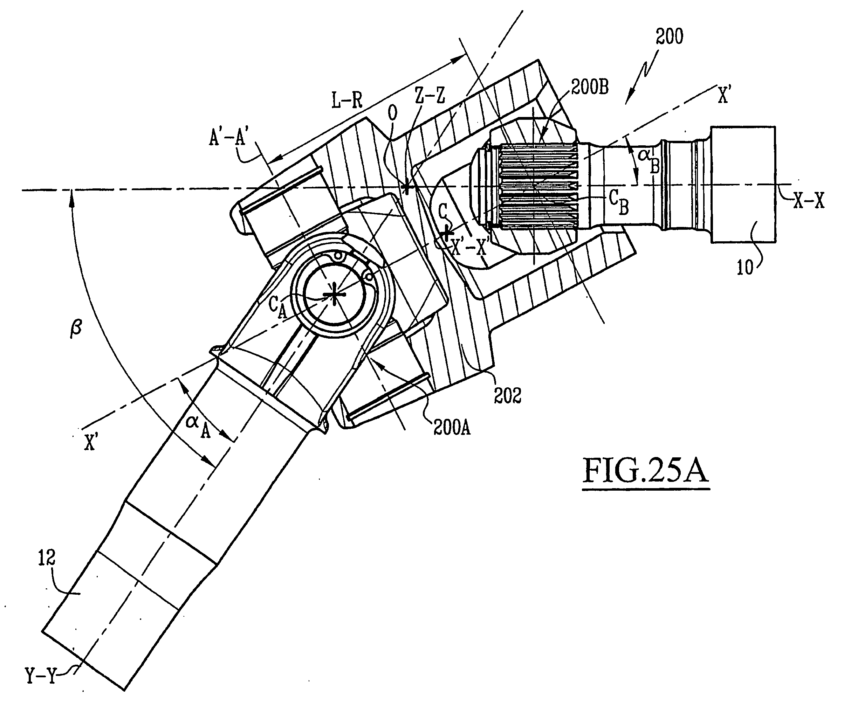

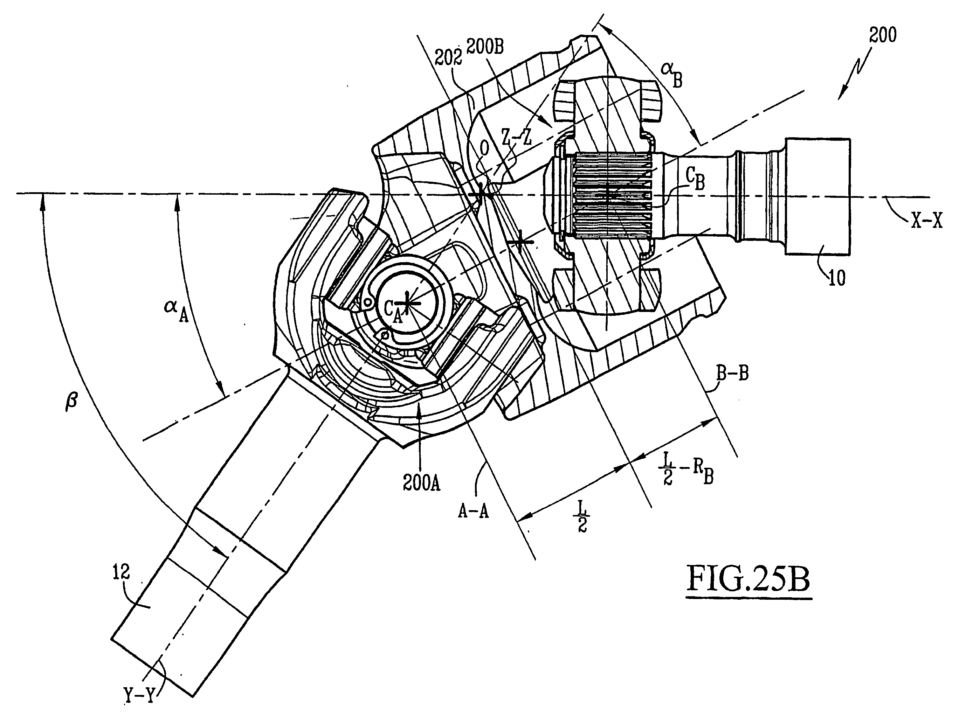

De ce fait, les angles α_{A} et α_{B} sont sensiblement égaux, comme représenté sur les figures 25A et 25B. L'essieu selon l'invention permet une transmission de couple sensiblement homocinétique pour toute valeur admissible de l'angle β et son comportement mécanique en transmission est amélioré.

De plus, lorsque l'essieu 1 est brisé par le braquage des roues motrices 2, le double-joint intègre le raccourcissement de la distance C_{A}C_{B} dû au braquage uniquement par le raccourcissement intégré R_{B} du joint coulissant 200B.

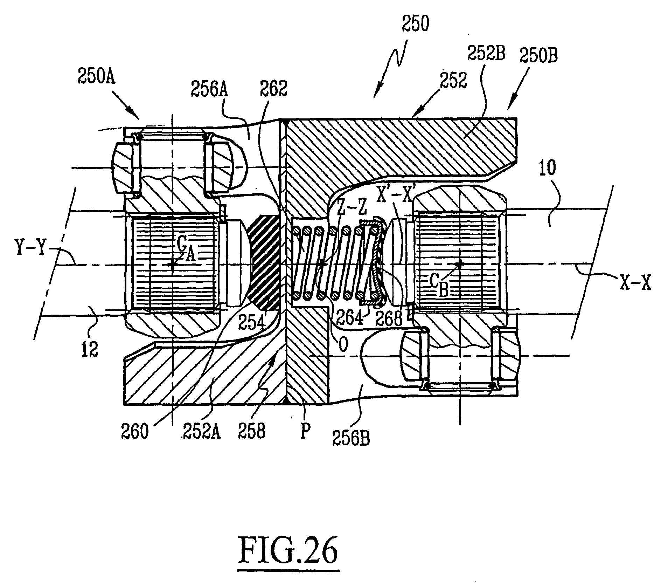

Sur la figure 26 est représenté un double-joint 250 en tant que variante du second mode de réalisation qui vient d'être décrit. Le double-joint 250 comporte un premier joint élémentaire à tripode 250A, non coulissant en fonctionnement, et un second joint élémentaire librement coulissant à tripode 250B. Le double-joint 250 comporte un corps de double-joint 252 délimitant un axe de double-joint X'-X' et comportant les deux corps de joint élémentaire 252A et 252B des joints 250A et 250B, solidarisés l'un à l'autre, par exemple par soudure.

Contrairement au mode de réalisation de la figure 2, le corps de double-joint 252 ne délimite pas une cavité intérieure commune aux deux joints élémentaires, mais forme au contraire une partie de paroi 254 s'étendant transversalement à l'axe de double-joint X'-X', au niveau d'un plan de jonction P, et délimitant ainsi deux cavités 256A, 256B distinctes de rotulage des joints 250A et 250B. Chaque cavité est ouverte sur l'extérieur à la fois sur le côté du corps de joint tourné vers l'arbre associé, et latéralement.

Le double-joint 250 également comporte d'une part un insert monobloc 260, par exemple en thermoplastique, solidarisé au corps de double-joint 252, positionné entre la partie de paroi 254 et l'extrémité de l'arbre 12, et d'autre part un ressort de compression 262 positionné entre la partie de paroi 254 et l'extrémité de l'arbre 10. Ce ressort 262 est muni à son extrémité tournée vers l'arbre 10 d'un capuchon métallique 264.

Un insert 268 en matière plastique est positionné entre le capuchon métallique 264 et l'extrémité de l'arbre 10. L'insert 268 est solidarisé au capuchon métallique 264, par exemple par clipsage au moyen de lèvres élastiques sensiblement analogues aux lèvres 76B pour l'insert 68B.

Le fonctionnement du double-joint 250 est sensiblement analogue à celui du double-joint 200 de la figure 23, le joint 250A se comportant comme un joint fixe en raison de la rigidité de l'insert 260 en butée contre la partie de paroi 254 et retenant ainsi la partie coulissante du joint, bien que ce joint 250A soit structurellement coulissant en soi. La distance séparant le centre d'articulation O du centre C_{A} du joint 250A est donc constante. Pour le joint coulissant 250B, la distance séparant son centre C_{B} du centre d'articulation O demeure également constante, par l'intermédiaire du corps de double-joint 252, axialement maintenu le long de son axe X'-X' du ressort 262 et de la partie de paroi 254. Lorsque l'essieu 1 est brisé par le braquage des roues motrices 2, le double-joint 250 intègre le raccourci de la distance C_{A}C_{B} dû au braquage, uniquement par le joint 250B.

Comme pour le premier mode de réalisation, le positionnement en appui pressé d'inserts en matière plastique entre les extrémités des arbres et les moyens de maintien axial du corps de double-joint améliore la tenue mécanique et la longévité du joint, même en cas de manque ou d'absence locale de lubrification.

De plus, cette variante du second mode de réalisation permet d'utiliser les trous borgnes 100A, 100B des arbres, généralement usinés lors de la fabrication de ces arbres, pour recevoir solidairement les inserts 260 et 268, comme pour la variante de la figure 9.

Diverses variantes à l'essieu décrit jusqu'ici sont envisageables, consistant aussi bien à agencer des joints élémentaires de nature structurelle et/ou cinématique différente, que de réaliser des aménagements au niveau des moyens de maintien axial de la partie coulissante du double-joint. A titre d'exemple, en ce qui concerne les inserts disposés entre les moyens de maintien axial et le corps de double-joint, d'autres matériaux que des matières thermoplastiques peuvent être utilisés, du moment que ces matériaux soient suffisamment résistants tout en permettant une réduction des usures et des efforts de frottement, tels que des cupro-alliages ; par ailleurs, les zones de contact entre les ressorts en étoile et les inserts peuvent faire l'objet d'une adhérisation antifriction au moyen de matières du type polyamide ou téflon.

## Revendications

1. Essieu moteur-directeur pour véhicules motorisés, du type comportant un différentiel (6), deux lignes (8) de transmission issues du différentiel et adaptées chacune pour entraîner une roue motrice et directrice (2), chaque ligne de transmission (8) comprenant un arbre menant (10) relié au différentiel (6), un arbre mené (12) relié à la roue motrice correspondante (2), un pivot de roue (20) d'axe orienté transversalement à chacun des arbres menant (10) et mené (12), et un double-joint (30 ; 144 ; 160 ; 170 ; 200 ; 250) de transmission de couple entre l'arbre menant (10) et l'arbre mené (12), lesdits arbres menant et mené étant guidés directionnellement dans l'espace indépendamment du double-joint, lequel double-joint est disposé sensiblement à l'aplomb du pivot (20) et comporte deux joints élémentaires (30A, 30B; 144A, 144B ; 160A, 160B ; 170A, 170B; 200A, 200B ; 250A, 250B) liés axialement l'un à l'autre suivant un axe de double-joint (X'-X') et présentant chacun un centre de brisure élémentaire (C_{A}, C_{B}), **caractérisé en ce que** chaque arbre (10, 12) définit une position fixe, suivant son axe (X-X, Y-Y), du centre de brisure élémentaire (C_{A}, C_{B}) du joint élémentaire correspondant, et **en ce que** l'un au moins des deux joints élémentaires (30A, 30B ; 144A, 144B ; 160A, 160B ; 170A, 170B ; 200B ; 250B) est un joint librement coulissant suivant l'axe de double-joint (X'-X').

2. Essieu suivant la revendication 1, **caractérisé en ce qu'**il comporte des moyens (9, 16, 17) de retenue axiale des arbres menant (10) et mené (12) suivant leurs axes respectifs (X-X, Y-Y).

3. Essieu suivant la revendication 2, **caractérisé en ce que** l'arbre menant (10) est solidaire d'un planétaire (9) du différentiel (6), assurant la retenue axiale de l'arbre menant suivant son axe (X-X), et **en ce que** l'arbre mené (12) est solidaire d'une fusée de roue (18) de la roue motrice correspondante (2), assurant la retenue axiale de l'arbre mené suivant son axe (Y-Y).

4. Essieu suivant l'une quelconque des revendications précédentes, **caractérisé en ce que** les deux joints élémentaires (30A, 30B ; 144A, 144B ; 160A, 160B ; 170A, 170B ; 200A, 200B ; 250A, 250B) sont axialement liés par un corps de double-joint (40 ; 145 ; 161 ; 175 ; 202 ; 252).

5. Essieu suivant l'une quelconque des revendications précédentes, **caractérisé en ce que** seul le premier joint élémentaire (200B) est un joint librement coulissant, et **en ce que** le second joint élémentaire (200A) est un joint structurellement non-coulissant.

6. Essieu suivant la revendication 4, **caractérisé en ce que** le double-joint (30 ; 144 ; 160 ; 170 ; 250) comporte des moyens (56A, 56B ; 106A, 106B ; 149, 151 ; 178A, 178B ; 254, 262) de maintien axial du corps de double-joint (40 ; 145 ; 161 ; 175 ; 252) pour ajuster les coulissements respectifs du ou de chaque joint élémentaire librement coulissant (30A, 30B ; 144A, 144B ; 160A, 160B ; 170A, 170B ; 250B), lesdits moyens de maintien axial étant à la fois reliés au corps de double-joint et en appui direct ou indirect sur les arbres menant (10) et mené (12).

7. Essieu suivant la revendication 6, **caractérisé en ce que** les moyens de maintien axial comportent au moins un organe de butée (56A, 56B; 106A, 106B ; 151 ; 178A, 178B ; 262) à élasticité axiale retenu par rapport au corps de double-joint (40 ; 145 ; 161 ; 175 ; 252) et présentant une zone (63A, 63B ; 113A, 113B ; 152A, 152B ; 180A, 180B ; 264) d'appui direct ou indirect pour les extrémités des arbres (10, 12) reliées par le double-joint.

8. Essieu suivant la revendication 7, **caractérisé en ce que** ladite zone d'appui direct (63A, 63B; 113A, 113B ; 152A, 152B ; 180A, 180B ; 264) et l'extrémité d'arbre correspondante (80, 84) sont de formes sensiblement complémentaires.

9. Essieu suivant l'une quelconque des revendications 6 à 8, **caractérisé en ce que** le double-joint (30 ; 250) comporte au moins un insert (68A, 68B ; 90A, 90B ; 260, 268) placé entre les moyens de maintien axial (56A, 56B ; 254, 262) et au moins l'un des arbres menant (10) et mené (12).

10. Essieu suivant la revendication 9, **caractérisé en ce que** le ou chaque insert présente une surface convexe (70A, 70B ; 96A, 96B) de contact avec une surface associée (63A, 63B) des moyens de maintien axiales (56A, 56B), sensiblement complémentaires de ladite surface convexe.

11. Essieu suivant la revendication 9 ou 10, **caractérisé en ce que** le ou chaque insert présente une surface concave (72A, 72B) ou plane (98A, 98B) de contact avec une surface d'extrémité (73A, 73B ; 99A, 99B) de l'arbre correspondant (10, 12), de forme sensiblement complémentaire de ladite surface concave ou plane.

12. Essieu suivant l'une quelconque des revendications 9 à 11, **caractérisé en ce que** le ou chaque insert (68A, 68B ; 260, 268) est solidarisé aux moyens de maintien axial (56A, 56B ; 254, 262), notamment par clipsage dudit insert sur lesdits moyens de maintien axial.

13. Essieu suivant l'une quelconque des revendications 9 à 11, **caractérisé en ce que** le ou chaque insert (90A, 90B) est solidarisé à l'arbre correspondant (10, 12), notamment par emmanchement et serrage d'une partie (92A, 92B) dudit insert à l'intérieur d'un trou borgne (100A, 100B) formé à l'extrémité dudit arbre.

14. Essieu suivant l'une quelconque des revendications 9 à 13, **caractérisé en ce que** le ou chaque insert (68A, 68B ; 90A, 90B ; 260, 268) est réalisé à base de matière plastique, contenant notamment du polyamide, du molybdène et des fibres de verre.

15. Essieu suivant l'une quelconque des revendications 6 à 14, **caractérisé en ce que** seul le premier joint élémentaire (250B) est un joint librement coulissant, et **en ce que** le second joint élémentaire (250A) est un joint structurellement coulissant pourvu de moyens (260) de retenue axiale de la partie coulissante dudit second joint.

16. Essieu suivant l'une quelconque des revendications 6 à 14, **caractérisé en ce que** les deux joints élémentaires (30A, 30B ; 144A, 144B ; 160A, 160B ; 170A, 170B) sont librement coulissants, et **en ce que** les moyens de maintien axial comportent, pour chaque joint élémentaire, un organe de butée à élasticité axiale formé d'un ressort en étoile (56A, 56B ; 106A, 106B ; 178A, 178B) pourvu d'un bombement (60A, 60B; 110A, 110B) formant un appui direct ou indirect pour les extrémités des arbres (10, 12) reliées par le double-joint (30 ; 144 ; 160 ; 170), et de plusieurs branches (58A, 58B ; 108A, 108B) qui s'étendent radialement par rapport à l'axe de double-joint (X'-X') depuis le bombement et dont les extrémités libres (64A, 64B ; 114A, 114B) sont reçues dans une rainure (66 ; 179) formée sur la périphérie intérieure du corps de double-joint (40 ; 145 ; 161 ; 175).

17. Essieu suivant la revendication 16, **caractérisé en ce qu'**au moins une branche de chaque ressort en étoile est pourvue d'un moyen (120A, 120B) d'indexage angulaire du ressort en étoile par rapport au corps de double-joint.

18. Essieu suivant la revendication 16 ou 17, **caractérisé en ce que** les moyens de maintien axial comportent un organe (116A, 116B ; 126A, 126B ; 128) d'arrêt axial disposé entre les bombements (60A, 60B ; 110A, 110B) des deux ressorts en étoile et adapté pour imposer un écart minimal (2h) entre ces bombements au moins lors de l'assemblage de l'essieu (1).

19. Essieu suivant l'une quelconque des revendications 16 à 18, **caractérisé en ce qu'**un ressort de compression (132) est interposé entre les bombements (60A, 60B ; 110A, 110B) des deux ressorts en étoile et adapté pour, éventuellement en combinaison avec lesdits ressorts en étoile, fixer la position axiale de chacun des arbres menant (10) et mené (12) suivant leurs axes respectifs (X-X, Y-Y).

20. Essieu suivant l'une quelconque des revendications précédentes, **caractérisé en ce que** les deux joints élémentaires (30A, 30B ; 144A, 144B ; 160A, 160B ; 170A, 170B ; 250A, 250B) sont sensiblement homocinétiques.

21. Essieu suivant la revendication 20, **caractérisé en ce que** les deux joints élémentaires sont choisis parmis les joints à tripodes (30A, 30B ; 144A ; 144B ; 160A, 160B ; 250A, 250B), les joints à billes (170A, 170B) et les joints à engrenage axial.

22. Essieu suivant l'une quelconque des revendications 1 à 19, **caractérisé en ce que** les deux joints élémentaires (200A, 200B) ont une cinématique du type Cardan sensiblement analogue.

23. Essieu suivant l'une quelconque des revendications précédentes, **caractérisé en ce que** les arbres menant (10) et mené (12) sont sensiblement coplanaires et définissent un centre d'articulation (O) au point d'intersection de leurs axes respectifs (X-X, Y-Y) lorsque ceux-ci forment un angle (β) de brisure du double-joint.

24. Essieu suivant la revendications 23, **caractérisé en ce que**, pour toute valeur admissible de l'angle de brisure du double-joint (β), les angles (α_{A}, α_{B}) de brisure élémentaires de chaque joint élémentaire sont sensiblement égaux.

25. Essieu suivant l'une quelconque des revendications précédentes, **caractérisé en ce que** chaque joint élémentaire (30A, 30B) est un joint à tripode à corps de joint comportant trois paires de pistes de coulissement (42A, 44A, 42B, 44B), et **en ce que** les trois paires de pistes (42A, 44A) d'un joint élémentaire (40A) sont déphasées d'environ 60° avec les trois paires de pistes (42B, 44B) de l'autre joint élémentaire (40B).

26. Essieu suivant l'une quelconque des revendications 1 à 24, **caractérisé en ce que** chaque joint élémentaire (160A, 160B) est un joint à tripode à corps de joint comportant trois paires de pistes de coulissement, et **en ce que** les trois paires de pistes d'un joint élémentaire (160A) sont disposées sensiblement dans le prolongement des trois paires de pistes de l'autre joint élémentaire (160B).

## Patentansprüche

1. Antriebslenkachse für motorgetriebene Fahrzeuge vom Typ aufweisend ein Differential (6), zwei aus dem Differential kommende Übertragungswellen (8) jede angepasst um ein treibendes und lenkendes Rad (2) anzutreiben, wobei jede Übertragungswelle (8) eine mit dem Differential (6) verbundene antreibende Welle (10) und eine mit dem korrespondierenden treibenden Rad (2) verbundene angetriebene Welle (12) aufweist, einen Radzapfen (20) mit einer transversal zu jeder der antreibenden (12) und angetriebenen (12) Wellen orientierten Achse, und ein doppeltes Gelenk (30; 144; 160; 170; 200; 250) zum Übertragen des Drehmomentes zwischen der antreibenden Welle (10) und der angetriebenen Welle (12), wobei diese antreibende und angetriebene Welle räumlich unabhängig vom doppelten Gelenk geführt sind, wobei das doppelte Gelenk etwa lotrecht zum Zapfen (20) angeordnet ist und zwei miteinander axial gemäß einer Achse des doppelten Gelenkes (X'-X') verbundene Elementar-Gelenke (30A, 30B; 144A, 144B; 160A, 160B; 170A, 170B; 200A, 200B; 250A, 250B) aufweist, wobei jedes ein Elementar Knickzentrum (C_{A}, C_{B}) aufweist, **dadurch gekennzeichnet dass** jede Welle (10, 12) gemäß ihrer Achse (X-X, Y-Y) eine feste Position des Elementar-Knickzentrums (C_{A}, C_{B}) des korrespondierenden Elementar-Gelenkes bestimmt und dass mindestens eines der beiden Elementar-Gelenke (30A, 30B; 144A,144B; 160A, 160B; 170A, 170B; 200B; 250B) ein gemäß der Achse des doppelten Gelenkes (X'-X')frei gleitendes Gelenk ist.

2. Achse gemäß Anspruch 1, **dadurch gekennzeichnet dass** sie Axialsicherungsmittel (9, 16, 17) aufweist der antreibenden (10) und angetriebenen (12) Wellen gemäß ihre respektiven Achsen (X-X, Y-Y).

3. Achse gemäß Anspruch 2, **dadurch gekennzeichnet dass** die antreibende Welle (10) fest verbunden ist mit einem Sonnenrad (9) des Differentials (6), welches die Axialsicherung der antreibenden Welle gemäß ihrer Achse (X-X) gewährleistet, und dass die angetriebene Welle (12) fest verbunden ist mit einem Achsschenkel (18) des korrespondierenden Antriebsrads (2), welches die Axialsicherung der angetriebene Welle gemäß ihrer Achse (Y-Y) gewährleistet.

4. Achse gemäß einem der Ansprüche 1 bis 3, **dadurch gekennzeichnet dass** die zwei Elementar-Gelenke (30A, 30B; 144A, 144B; 160A, 160B; 170A, 170B; 200A, 200B; 250A, 250B) axial mit einem Körper vom doppelten Gelenk (40; 145; 161; 175; 202; 252) verbunden sind.

5. Achse gemäß einem der Ansprüche 1 bis 4 **dadurch gekennzeichnet dass** nur das erste Elementar-Gelenk (200B) ein frei gleitendes Gelenk ist, und dass das zweite Elementar-Gelenk (200A) strukturell ein nicht-gleitendes Gelenk ist.

6. Achse gemäß Anspruch 4, **dadurch gekennzeichnet dass** das doppelte Gelenk (30; 144; 160; 170; 250) Mittel (56A, 56B; 106A, 106B; 149, 151; 178A, 178B; 254, 262) aufweist zur Axialsicherung des Körpers vom doppelten Gelenk (40; 145; 161; 175; 252) zur Adjustierung vom respektiven Gleiten des oder von jedem frei gleitenden Elementar-Gelenk (30A, 30B; 144A,144B; 160A, 160B; 170A, 170B; 250B), wobei diese Mittel der Axialsicherung zugleich verbunden sind mit dem Körper des doppelten Gelenkes und sich direkt oder indirekt auf die antreibende (10) und angetriebene (12) Welle stützen.

7. Achse gemäß Anspruch 6, **dadurch gekennzeichnet dass** die Mittel der Axialsicherung mindestens ein Anschlagsorgan (56A, 56B; 106A, 106B; 151; 178A, 178B; 262) mit axialer Elastizität aufweisen welches gesichert ist in Bezug auf den Körper des doppelten Gelenkes (40; 145; 161; 175; 252) und welches für die durch das doppelte Gelenk verbundene Endabschnitte der Wellen (10, 12) einen Bereich (63A, 63B; 113A, 113B; 152A, 152B; 180A, 180B; 264) von direkter oder indirekter Unterstützung aufweisen.

8. Achse gemäß Anspruch 7, **dadurch gekennzeichnet dass** dieser Bereich der direkten Unterstützung (63A, 63B; 113A, 113B; 152A, 152B; 180A, 180B; 264) und der Endabschnitt der korrespondierenden Welle (80, 84) eine nahezu komplementäre Form besitzen.

9. Achse gemäß einem der Ansprüche 6 bis 8 **dadurch gekennzeichnet dass** das doppelte Gelenk (30; 250) mindestens einen Einsatz (68A, 68B; 90A, 90B; 260, 268) aufweist, welcher zwischen den Mitteln der Axialsicherung (56A, 56B; 254, 262) und mindestens einer der antreibenden (10) und angetriebenen (12) Wellen angeordnet ist.

10. Achse gemäß Anspruch 9, **dadurch gekennzeichnet dass** der oder jeder Einsatz eine konvexe Oberfläche (70A, 70B; 96A, 96B) aufweist, welche im Kontakt steht mit einer zugeordneten Oberfläche (63A, 63B) der Mittel zur Axialsicherung (56A, 56B), die im wesentlichen komplementär zu dieser konvexen Oberfläche sind.

11. Achse gemäß Anspruch 9 oder 10, **dadurch gekennzeichnet dass** der oder jeder Einsatz eine konkave (72A, 72B) oder ebene (98A, 98B) Oberfläche aufweist, welche im Kontakt steht mit einer Endabschnitt-Oberfläche (73A, 73B; 99A, 99B) der korrespondierenden Welle (10, 12), mit einer Form die etwa komplementär ist zur dieser konkaven oder ebenen Oberfläche.

12. Achse gemäß einem der Ansprüche 9 bis 11 **dadurch gekennzeichnet dass** der oder jeder Einsatz (68A, 68B; 260, 268) fest mit den Mitteln der Axialsicherung (56A, 56B; 254, 262) verbunden ist, insbesondere durch das Klammern dieses Einsatzes auf diese Mittel zur Axialsicherung.

13. Achse gemäß einem der Ansprüche 9 bis 11 **dadurch gekennzeichnet dass** der oder jeder Einsatz (90A, 90B) fest mit der übereinstimmenden Welle (10, 12) verbunden ist, insbesondere durch das Einsetzen und Klemmen eines Teiles (92A, 92B) dieses Einsatzes innerhalb eines am Endabschnitt dieser Welle gebildeten Sackloches (100A, 100B).

14. Achse gemäß einem der Ansprüche 9 bis 13 **dadurch gekennzeichnet dass** der oder jeder Einsatz (68A, 68B; 90A, 90B; 260, 268) hergestellt ist auf der Basis von Kunststoff der insbesondere Polyamid, Molybdän und Glasfaser enthält.

15. Achse gemäß einem der Ansprüche 6 bis 14 **dadurch gekennzeichnet dass** nur das erste Elementar-Gelenk (250B) ein frei gleitendes Gelenk ist, und dass das zweite Elementar-Gelenk (250A) ein von der Struktur her gleitendes Gelenk ist, das Mittel (260) zur Axialsicherung des gleitenden Teiles dieses zweiten Gelenkes aufweist.

16. Achse gemäß einem der Ansprüche 6 bis 14 **dadurch gekennzeichnet dass** die zwei Elementar-Gelenke (30A, 30B; 144A, 144B; 160A, 160B; 170A, 170B) frei gleitend sind, und dass die Mittel zur Axialsicherung für jedes Elementar-Gelenk ein Anschlagsorgan mit axialer Elastizität aufweisen, gebildet durch eine sternförmige Feder (56A, 56B; 106A, 106B; 178A, 178B), welche mit einer eine direkte oder indirekte Stütze für die Endabschnitte der durch das doppelte Gelenk (30; 144; 160; 170) verbundenen Wellen (10, 12) darstellenden Wölbung (60A, 60B; 110A, 110B) versehen ist und mit mehreren Zweigen (58A, 58B; 108A, 108B) welche sich radial gegenüber der Achse des doppelten Gelenkes (X'-X') von der Wölbung an erstrecken und deren freie Endabschnitte (64A, 64B; 114A, 114B) gehalten werden in einer in der inneren Peripherie des Körpers des doppelten Gelenkes (40; 145; 161; 175)gebildeten Rille(66; 179).

17. Achse gemäß Anspruch 16, **dadurch gekennzeichnet dass** mindestens ein Zweig jeder sternförmigen Feder ein Mittel (120A, 120B) aufweist zur winkelmäßigen Indexierung der sternförmigen Feder gegenüber dem Körper des doppelten Gelenkes.

18. Achse gemäß Anspruch 16 oder 17, **dadurch gekennzeichnet dass** die Mittel zur Axialsicherung ein Organ (116A, 116B; 126A, 126B; 128) zum axialen Arretieren aufweisen, welches zwischen den Wölbungen (60A, 60B; 110A, 110B) der zwei sternförmigen Feder angeordnet ist und angepasst ist, um mindestens beim Zusammenbau der Achse (1) einen minimalen Abstand (2h) zwischen diesen Wölbungen bewirken.

19. Achse gemäß einem der Ansprüche 16 bis 18, **dadurch gekennzeichnet dass** eine Kompressionsfeder (132) zwischen die Wölbungen (60A, 60B; 110A, 110B) der zwei sternförmigen Feder angeordnet ist und angepasst ist, um, eventuell zusammen mit diesen sternförmigen Federn, die axiale Position jeder der antreibenden (10) und angetriebenen (12) Wellen gemäß ihre respektiven Achsen (X-X, Y-Y) zu befestigen.

20. Achse gemäß einem der vorgehenden Ansprüchen, **dadurch gekennzeichnet dass** die zwei Elementar-Gelenke (30A, 30B; 144A, 144B; 160A, 160B; 170A, 170B; 250A, 250B) etwa homokinetisch sind.

21. Achse gemäß dem Anspruch 20, **dadurch gekennzeichnet dass** die beide Elementar-Gelenke gewählt wurden unter den Gelenken mit Tripoden (30A, 30B; 144A, 144B; 160A, 160B; 250A, 250B), den Gelenken mit Kugeln und den Gelenken mit axialem Getriebe.

22. Achse gemäß einem der Ansprüchen 1 bis 19, **dadurch gekennzeichnet dass** die zwei Elementar-Gelenke (200A, 200B) eine nahezu analoge Kinematik vom Typ Kardan aufweisen.

23. Achse gemäß einem der vorgehenden Ansprüchen, **dadurch gekennzeichnet dass** die antreibende (10) und angetriebene (12) Welle nahezu koplanar sind und im Schnittpunkt ihrer jeweiligen Achse (X-X, Y-Y) ein Gelenkzentrum bestimmen, wenn diese einen Knickwinkel (β) des doppelten Gelenkes bilden.

24. Achse gemäß dem Anspruch 23, **dadurch gekennzeichnet dass** für jeden zugelassenen Wert des Knickwinkels (β), die Elementar-Knickwinkel (α_{A},α_{B}) jedes Elementar-Gelenkes ungefähr gleich sind.

25. Achse gemäß einem der vorgehenden Ansprüchen, **dadurch gekennzeichnet dass** jedes Elementar-Gelenk (30A, 30B) ein Tripodegelenk ist mit einem Gelenkkörper welcher drei Paare Gleitspuren (42A, 44A, 42B, 44B) aufweist und dass die drei Pistenspuren (42A, 44A) eines Elementar-Gelenkes (40A) über etwa 60° verschoben sind gegenüber den drei Pistenpaaren des anderen Elementar-Gelenkes (40B).

26. Achse gemäß einem der Ansprüche 1 bis 24, **dadurch gekennzeichnet dass** jedes Elementar-Gelenk (160A, 160B) ein Tripodegelenk ist mit einem Gelenkkörper welcher drei Paare Gleitspuren aufweist und dass die drei Pistenpaare eines Elementar-Gelenkes (160A) nahezu in der Verlängerung der drei Pistenpaare des anderen Elementar-Gelenkes (160B) angeordnet sind.

## Claims

1. Drive-steer axle for motor-driven vehicles, of the type comprising a differential (6), two transmission lines (8) coming from the differential and each adapted to drive a driving and steering wheel (2), each transmission line (8) comprising a driving shaft (10) connected to the differential (6), a driven shaft (12) connected to the corresponding drive wheel (2), a wheel pivot (20) the axis of which is oriented transversely to both the driving shaft (10) and the driven shaft (12), and a double-joint (30; 144; 160; 170; 200; 250) for transmission of the torque between the driving shaft (10) and the driven shaft (12), said driving and driven shafts being directionally guided in space independently of the double-joint, said double-joint being disposed substantially in vertical alignment with the pivot (20) and having two elementary joints (30A, 30B; 144A, 144B; 160A, 160B; 170A, 170B; 200A, 200B; 250A, 250B) axially connected to each other along a double-joint axis (X'-X') and each having an elementary break centre (C_{A}, C_{B}), **characterised in that** each shaft (10, 12) defines a fixed position, along its axis (X-X, Y-Y), of the elementary break centre (C_{A}, C_{B}) of the corresponding elementary joint, and **in that** at least one of the two elementary joints (30A, 30B; 144A, 144B; 160A, 160B; 170A, 170B; 200B; 250B) is a joint which slides freely along the double-joint axis (X'-X').

2. Axle according to claim 1, **characterised in that** it comprises means (9, 16, 17) for axially holding the driving shaft (10) and driven shaft (12) along their respective axes (X-X, Y-Y).

3. Axle according to claim 2, **characterised in that** the driving shaft (10) is integrally connected to a planet gear (9) of the differential (6), ensuring that the drive shaft is axially held along its axis (X-X), and **in that** the driven shaft (12) is integrally connected to a wheel spindle (18) of the corresponding drive wheel (2), ensuring that the driven shaft is axially held along its axis (Y-Y).

4. Axle according to any one of the preceding claims, **characterised in that** the two elementary joints (30A, 30B; 144A, 144B; 160A, 160B; 170A, 170B; 200A, 200B; 250A, 250B) are axially connected by a double-joint body (40; 145; 161; 175; 202; 252).

5. Axle according to any one of the preceding claims, **characterised in that** only the first elementary joint (200B) is a freely sliding joint, and **in that** the second elementary joint (200A) is a structurally non-sliding joint.

6. Axle according to claim 4, **characterised in that** the double-joint (30; 144; 160; 170; 250) comprises means (56A, 56B; 106A, 106B; 149, 151; 178A, 178B; 254, 262) for axially securing the double-joint body (40; 145; 161; 175; 202; 252) in order to adjust the respective sliding of the or each freely sliding elementary joint (30A, 30B; 144A, 144B; 160A, 160B; 170A, 170B; 250B), said axial securing means being simultaneously connected to the double-joint body and abutting directly or indirectly on the drive shaft (10) and driven shaft (12).

7. Axle according to claim 6, **characterised in that** the axial securing means comprise at least one axially resilient abutment member (56A, 56B; 106A, 106B; 151; 178A, 178B; 262), held relative to the double-joint body (40; 145; 161; 175; 252) and having a direct or indirect abutment zone (63A, 63B; 113A, 113B; 152A, 152B; 180A, 180B; 264) for the ends of the shafts (10, 12) connected by the double-joint.

8. Axle according to claim 7, **characterised in that** the direct abutment zone (63A, 63B; 113A, 113B; 152A, 152B; 180A, 180B; 264) and the corresponding shaft end (80, 84) are substantially complementary in shape.

9. Axle according to any one of claims 6 to 8, **characterised in that** the double-joint (30; 250) comprises at least one insert (68A, 68B; 90A, 90B; 260, 268) placed between the axial securing means (56A, 56B; 254, 262) and at least one of the drive shaft (10) and driven shaft (12).

10. Axle according to claim 9, **characterised in that** the or each insert has a convex surface (70A, 70B; 96A, 96B) for contact with an associated surface (63A, 63B) of the axial securing means (56A, 56B), substantially complementary to said convex surface.

11. Axle according to claim 9 or 10, **characterised in that** the or each insert has a concave (72A, 72B) or flat surface (98A, 98b) for contact with an end surface (73A, 73B; 99A, 99B) of the corresponding shaft (10, 12), substantially complementary in shape to said concave or flat surface.

12. Axle according to any one of claims 9 to 11, **characterised in that** the or each insert (68A, 68B; 260, 268) is fixed to the axial securing means (56A, 56B; 254, 262), notably by clipping said insert to said axial securing means.

13. Axle according to any one of claims 9 to 11, **characterised in that** the or each insert (90A, 90B) is fixed to the corresponding shaft (10, 12), notably by fitting and clamping a part (92A, 92B) of the insert inside a blind hole (100A, 100B) formed at the end of said shaft.

14. Axle according to any one of claims 9 to 13, **characterised in that** the or each insert (68A, 68B; 90A, 90B; 260, 268) is made from a plastics material, particularly containing polyamide, molybdenum and fibreglass.

15. Axle according to any one of claims 6 to 14, **characterised in that** only the first elementary joint (250B) is a freely sliding joint, and **in that** the second elementary joint (250A) is a structurally sliding joint provided with means (260) for axially securing the sliding part of said second joint.

16. Axle according to any one of claims 6 to 14, **characterised in that** the two elementary joints (30A, 30B; 144A, 144B; 160A, 160B; 170A, 170B) are freely sliding, and **in that** the axial securing means comprise, for each elementary joint, an axially resilient abutment member formed from a star-shaped spring (56A, 56B; 106A, 106B; 178A, 178B) provided with a convexity (60A, 60B; 110A, 110B) forming a direct or indirect abutment for the ends of the shafts (10, 12) connected by the double-joint (30; 144; 160; 170), and a plurality of branches (58a, 58b; 108a, 108b) which extend radially relative to the double-joint axis (X'-X') from the convexity and the free ends (64A, 64B; 114A, 114B) of which are accommodated in a groove (66; 179) formed on the inner periphery of the double-joint body (40; 145; 161; 175).

17. Axle according to claim 16, **characterised in that** at least one branch of each star-shaped spring is provided with means (120A, 120B) for angularly indexing the star-shaped spring relative to the double-joint body.

18. Axle according to claim 16 or 17, **characterised in that** the axial securing means comprise an axial locking member (116A, 116B; 126A, 126B; 128) disposed between the convexities (60A, 60B; 110A, 110B) of the two star-shaped springs and adapted to force a minimum spacing (2h) between these convexities at least during the assembling of the axle (1).

19. Axle according to any one of claims 16 to 18, **characterised in that** a compression spring (132) is interposed between the convexities (60A, 60B; 110A, 110B) of the two star-shaped springs and adapted to fix the axial position of both the drive shaft (10) and the driven shaft (12) along their respective axes (X-X, Y-Y), optionally in conjunction with said star-shaped springs.

20. Axle according to any one of the preceding claims, **characterised in that** the two elementary joints (30A, 30B; 144A, 144B; 160A, 160B; 170A, 170B; 250A, 250B) are substantially homokinetic.

21. Axle according to claim 20, **characterised in that** the two elementary joints are selected from among the tripod joints (30A, 30B; 144A, 144B; 160A, 160B; 250A, 250B), the ball-bearing joints (170A, 170B) and the axial meshing joints.

22. Axle according to any one of claims 1 to 19, **characterised in that** the two elementary joints (200A, 200B) have substantially analogous cardan-type kinetics.

23. Axle according to any one of the preceding claims, **characterised in that** the drive shaft (10) and driven shaft (12) are substantially coplanar and define an articulation point (O) at the point of intersection of their respective axes (X-X, Y-Y) when the latter form an angle (β) of break of the double-joint.

24. Axle according to claim 23, **characterised in that**, for all admissible values of the angle (β) of break of the double-joint, the elementary angles (α_{A}, (α_{B}) of break of each elementary joint are substantially equal.

25. Axle according to any one of the preceding claims, **characterised in that** each elementary joint (30A, 30B) is a tripod joint with a joint body comprising three pairs of sliding raceways (42A, 44A, 42B, 44B), and **in that** the three pairs of raceways (42A, 44A) of an elementary joint (40A) are out of phase by about 60° with the three pairs of raceways (42B, 44B) of the other elementary joint (40B).

26. Axle according to any one of claims 1 to 24, **characterised in that** each elementary joint (160A, 160B) is a tripod joint with a joint body comprising three pairs of sliding raceways, and **in that** the three pairs of raceways of an elementary joint (160A) are disposed substantially on an extension of the three pairs of raceways of the other elementary joint (160B).
